# EUROPEAN PATENT APPLICATION

(11) **EP 3 621 024 A1**
(43) Date of publication of application: **11.03.2020**
(21) Application number: 19160129.3
(22) Date of filing: 28.02.2019
(51) Int. Cl.: G06Q 50/28, G06Q 10/08

(54) **THE NAUTICA PROJECT**

(30) Priority: 07.09.2018 IN 201811033797
(71) Applicant: Sharma, Anuj, New Delhi 110002 (IN)
(72) Inventor: Sharma, Anuj, New Delhi 110002 (IN)
(74) Representative: Potter Clarkson

(57) **Abstract**

A method and system providing complete global maritime mobility, operation and execution of any kind, anywhere, at any place by an authorised user, the system comprising live hologram projections "Digital Assets" of all on field "Physical Assets" including humans; and the system using Augmented Reality-Mixed Reality for creating live "Digital Twins" referred to as Hologram Projections of all available physical assets including humans in real world complete with monitoring, visualisation, communication, operations and execution capabilities; the system incorporating Data Infused Holograms with Artificial Intelligence Powered Descriptive, Predictive, Prescriptive and Cognitive (Fully Autonomous) Analytics and operative capabilities for Global Maritime World; each hologram of a physical asset having infinite data points as required.

## Description

### FIELD OF INVENTION

The Nautica Project is an Augmented Reality-Mixed Reality and Software platform for Maritime, Shipping and Maritime Ports Command and Control, Security operations and Maritime assets with Artificial Intelligence (Ai) Powered Descriptive, Predictive, prescriptive and Cognitive (Fully autonomous) Analytics and operative capabilities for Global Maritime World.

### STATEMENT OF INVENTION

The NAUTICA PROJECT for the first time in the history of mankind provides:
I. Live Hologram projections "Digital Assets" of all on field "Physical Assets" including humans
II. Data Infused Holograms with Artificial Intelligence (Ai) Powered Descriptive, Predictive, prescriptive and Cognitive (Fully autonomous) Analytics and operative capabilities for Global Maritime World. Each Hologram of a Physical asset has infinite data points as required.
III. NAUTICA provides live holographic visualizations of all maritime and Sea Port assets.
IV. Live holographic visualizations with Ai Analytics in real time leads to total operational awareness, planning, rehearsal, and execution-operations.
V. NAUTICA creates Absolute Situational awareness by providing real-time information on the current situation and execution-operational capabilities from NAUTICA itself. Nautica can be accessed anytime anywhere and provides complete mobility for entire operations. No Brick and Mortar facilities are required to operate Nautica.
VI. NAUTICA provides complete global defense mobility, operation and execution anytime, anywhere, anyplace and by any user authorized to access Nautica. All Function of NAUTICA are "Touch" and "Voice Command "Enabled.
VII. NAUTICA will be developed in AR (Augmented Reality-MR (Mixed Reality) Holographic screens and projections
VIII. NAUTICA will also be developed in software mode available in computers, tablets, mobile phones and smart screens
IX. NAUTICA should be operated on a secured -encrypted environment due to its sensitivity and strategic deployment capabilities.
X. Authority levels of NAUTICA access per screen and functions can be decided as per user requirements.
XI. NAUTICA Holograms can also be held by hand and moved around.

### SUMMARY OF INVENTION

THE NAUTICA PROJECT uses Augmented Reality-Mixed Reality to create live "Digital Twins" referred to as Hologram Projections of all available "Physical Assets including humans in real world complete with monitoring, visualization, communication, operations and execution capabilities incorporating Artificial Intelligence (Ai) Powered Descriptive, Predictive, prescriptive and Cognitive (Fully autonomous) Analytics and operative capabilities for Global Maritime World.

Technology Description: The following technologies have been used to create THE NAUTICA PROJECT:
HoloLens AR-MR Glasses, META 2 AR-MR Glasses, Any AR-MR Glasses, Magic Leap MR Glasses, Unity 3D, Vuforia, Maya 3D, Microsoft .Net Platform, Azure Cloud Platform, HTML 5, CSS 3, JavaScript, Angular, jQuery, IOT tech, Al/Machine Learning, Python.

### SCOPE OF INVENTION

The scope of THE NAUTICA PROJECT is to provide a single Global platform for all types of Maritime agencies, institutions powered with Artificial Intelligence operational and analytics and real time monitoring through live "Digital Twins" referred to as Hologram Projections of all available "Physical Assets" including humans.

### STATEMENT REGARDING FEDERALLY SPONSORED RESEARCH OR DEVELOPMENT (IN ANY)

THE NAUTICA PROJECT is NOT a government, or third party sponsored research and development.

### A BRIEF DESCRIPTION OF ACCOMPANYING DRAWINGS

The foregoing detailed description of embodiments is better understood when read in conjunction with the appended drawing. For the purpose of illustrating the disclosure, there is shown in the present document example constructions of the disclosure; however, the disclosure is not limited to the specific methods disclosed in the document and the drawings.

The detailed description is described with reference to the accompanying figure. In the figure, the left-most digit(s) of a reference number identifies the figure in which the reference number first appears. The same numbers are used throughout the drawings to refer like features and components.

Figure 1 to Figure 36 provide a description of the capabilities and functionalities of The NAUTICA PROJECT and its applications.
Figure 1: shows the choices available to the user to start the project.
Figure 2: depicts the command options available to the user, including hologram box in AR and MR with Central command.
Figure 3: depicts the hologram box in AR and MR with the option given to user to select any country.
Figure 4: Refers to hologramic image of the country selected.
Figure 5: depicts the Hologramic map of the selected country as a "IN AIR VIEW" and is broken by Nautica in assets and boundaries.
Figure 6: is an "On ground" hologram projection of Figure 5.
Figure 7 A: depicts the hologram view of a ship asset.
Figure 7B: depicts the screen with actual photo of the Ship Asset as chosen in Fig. 7A above, along with the various buttons available to user regarding the Ship Asset, such as buttons for communication, GPS Coordination, time estimate, with fuel sensor, weather sensors, cargo details, area of the ship and manual related to the Ship Asset.
Figure 8: depicts the hologram screens of personnel / crew members.
Figure 9: depicts screens for the Ship passengers.
Figure 10: depicts the Cargo screens.
Figure 11: depicts the illustration of an Engine Room.
Figure 12: depicts the holographic screens of a living quarter.
Figure 13: depicts the holographic screens of maintenance.
Figure 14: depicts canteen and the further options available once a user selects the option 'canteen'.
Figure 15: depicts screens for issuing and deliveries schedule.
Figure 16: depicts screen for Ship's main bridge or control room and its further details/options.
Figure 17: depicts the hologram screens of a "Buoy" and its further details.
Figure 18: depicts the holographic screens of a "Tug boat" and its further details.
Figure 19: refers to the hologram of a "Port Berth" and its further details.
Figure 20: depicts the "docking schedule" hologram screens.
Figure 21: depicts the holographic screens of "Cranes" as a digital asset and its further options available to the user.
Figure 22: depicts the holographic screens "CARGO CAPABILITY SCREEN" and its further options available to the user.
Figure 23: depicts the holographic screens of CARGO CAPACITY and its further options available to the user.
Figure 24: depicts the digital asset of "Weigh Bridge".
Figure 25: depicts the screens of REFERS TO HOLOGRAMIC IMAGE OF VEHICLE and its further options available to the user.
Figure 26: depicts the screens of STORAGE TANK HOLOGRAM and its further options available to the user.
Figure 27: depicts HOLOGRAM OF PORT OPEN STORAGE-CARGO AREA IN AR-MR and its further options available to the user.
Figure 28: refers to Hologram of a Lighthouse and its further options available to the user.
Figure 29: refers to HOLOGRAM OF SECURITY TOWER and its further options available to the user.
Figure 30: depicts the digital asset of a "Train and Railway Lines" and its further options available to the user.
Figure 31: depicts the screens of "Port Channel and Outer Sea" and its further options available to the user.
Figure 32: depicts the screens of a Jetty and its further options available to the user.
Figure 33: depicts an example of screens of NAUTICA Al- ARTIFICIAL INTELLIGENCE COMMMAND.
Figure 34: depicts an example of further screens of NAUTICA Al that open after Fig. 33.
Figure 35: depicts the HOLOGRAM OF ROTATING EARTH.
Figure 36: depicts the Digital Asset of a "DRONE / UNMANNED ARIAL VEHICLE 9UAV)".

### LEGEND FOR DRAWINGS

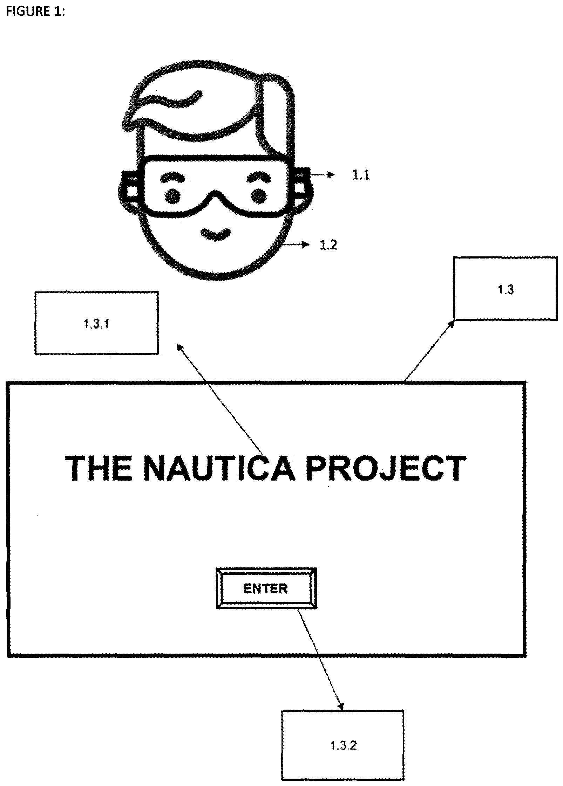

### Legend for Figure 1:

1.1 SMART GLASSES WITH AR-MR
1.2 USER (HUMAN/ROBOT/ ALIEN)
1.3 HOLOGRAMIC BOX IN AR-MR
1.3.1 HOLOGRAMIC TEXT IN AR-MR
1.3.2 CLICKABLE BUTTON OR "VOICE COMMAND ACTIVATED"

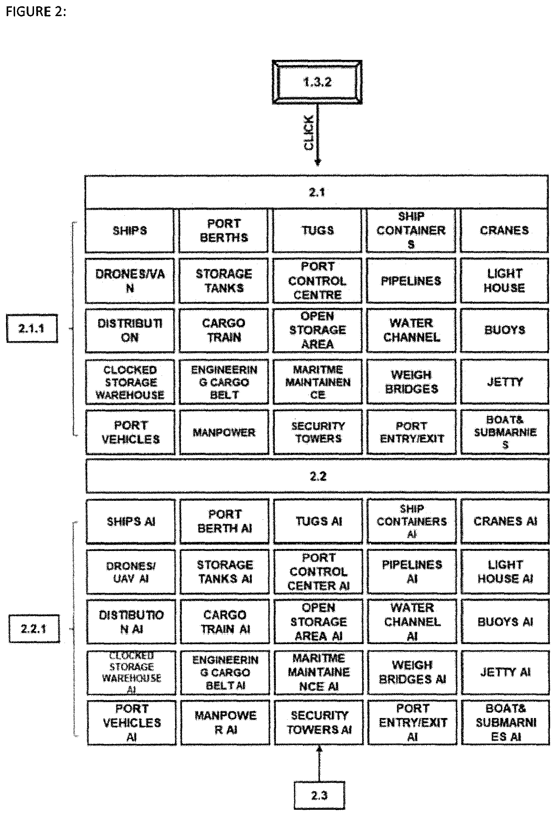

### Legend for Figure 2:

1.3.2 REFERS TO CLICKABLE BUTTON OR "VOICE COMMAND ACTIVATED" BUTTON IN FIGURE 1 OF THE DOCUMENT
2.1 NAUTICA CENTRAL COMMAND
2.1.1 EVERY ROW AND COLUMN IS CLICKABLE OF THE CENTRAL COMMAND
2.2 NAUTICA ARTIFICIAL INTELLIGENCE
2.1.1 EVERY ROW AND COLUMN IS CLICKABLE OF THE NAUTICA ARTIFICIAL INTELLIGENCE
2.3 HOLOGRAM BOX IN AR-MR

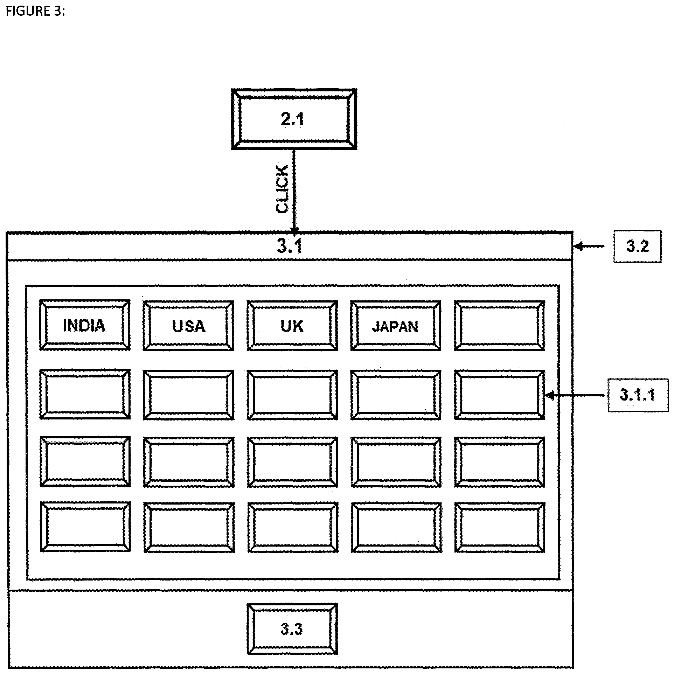

### Legend for Figure 3:

2.1 REFERS TO NAUTICA CENTRAL COMMAND IN THE FIGURE 2 OF THE DOCUMENT
3.1 REFERS TO SHIPS BASED ON SELECTION IN 2.1
3.1.1 ALL BUTTONS ARE CLIKABLE BUTTON FOR ALL COUNTRIES OF THE WORLD
3.2 HOLOGRAM BOX IN AR-MR
3.3 BUTTON FOR COMBINING ALL COUNTRIES OF THE WORLD

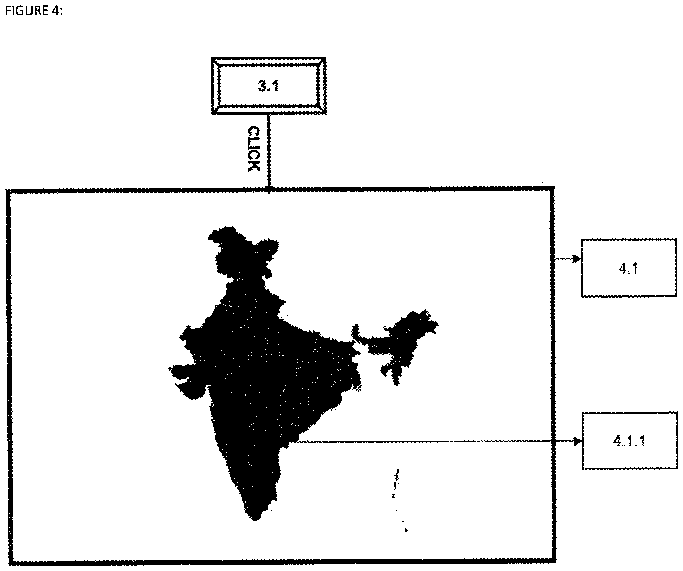

### Legend for Figure 4:

3.1 REFERS TO SELECTION MADE IN FIGURE 3 OF THE DOCUMENT
4.1 HOLOGRAMIC IMAGE OF COUNTRY OPENS IN AR-MR
4.1.1 HOLOGRAM OF THE COUNTRY SELECTED

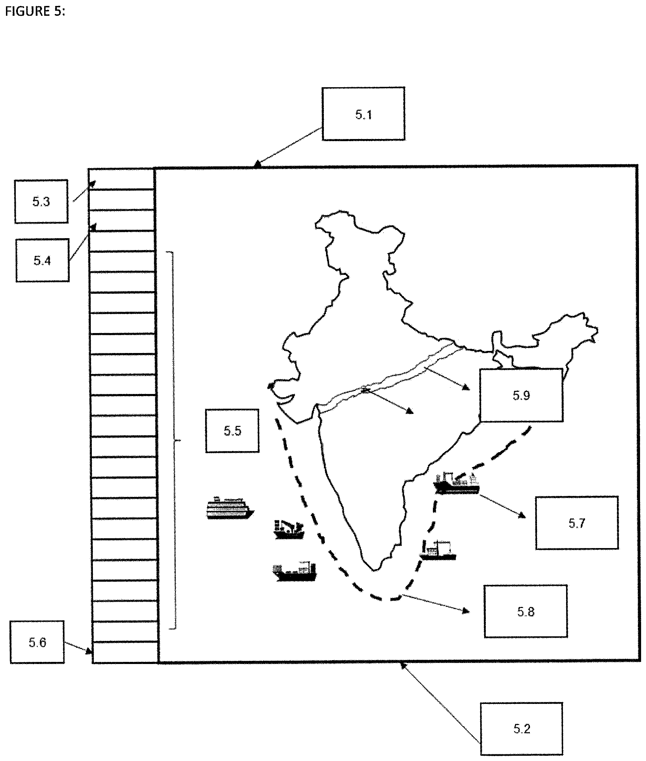

### Legend for Figure 5:

5.1 "IN AIR VIEW"
5.2 HOLOGRAM BOX IN AR-MR
5.3 BACK BUTTON
5.4 NAUTICA CENTRAL COMMAND BUTTON
5.5 ALL COUNTRIES BUTTON
5.6 WORLD BUTTON
5.7 HOLOGRAM OF ALL SHIPS APPEAR IN BOTH NATIONAL AND INTERNATIONAL WATERS AROUND THAT COUNTRY
5.8 A COLOURED LINE IN THE HOLOGRAM ALSO SHOWS MARITIME BOUNDARY AROUND THAT COUNTRY
5.9 RIVERS ARE ALSO SHOWN IN THE HOLOGRAM
5.10 SHIPS AND BOATS IN THE RIVER
NOTE: ALL COUNTRIES WILL HAVE TO BE MADE IN NAUTICA LIKE ABOVE ILLUSTRATION

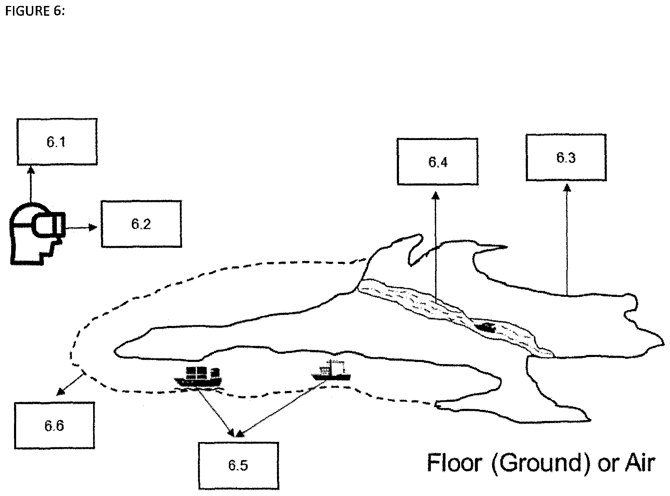

### Legend for Figure 6:

6.1 USER
6.2 SMART GLASS
6.3 HOLOGRAM PROJECTION OF INDIA ON GROUND
6.4 HOLOGRAMIC IMAGE OF RIVER
6.5 HOLOGRAMIC IMAGE OF SHIPS
6.6 INTERNATIONAL MARITIME BOUNDARY HOLOGRAM
**NOTE: ALL MARITIME SHIPPING, WATERWAYS, PORT MACHINERY, EQUIPMENTS, BUILDING, WORKERS ARE ALL ASSETS.**
**NAUTICA IS CREATING A "DIGITAL TWIN" OF THAT "PHYSICAL ASSET". THE DIGITAL TWIN IS A "LIVE" REPLICATION.**

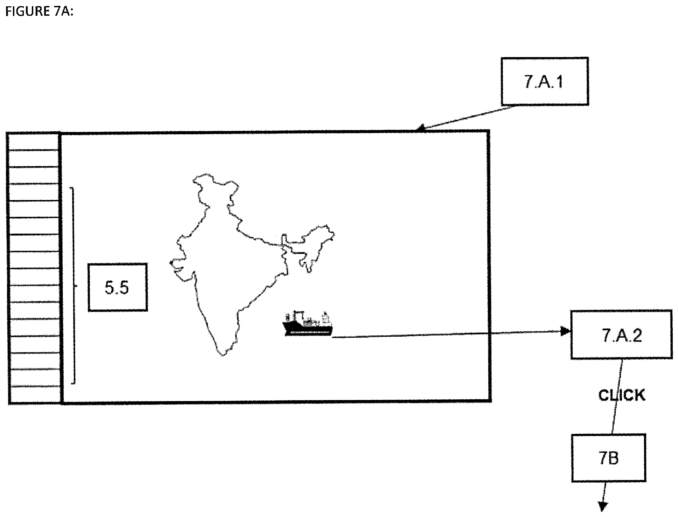

### Legend for Figure 7A:

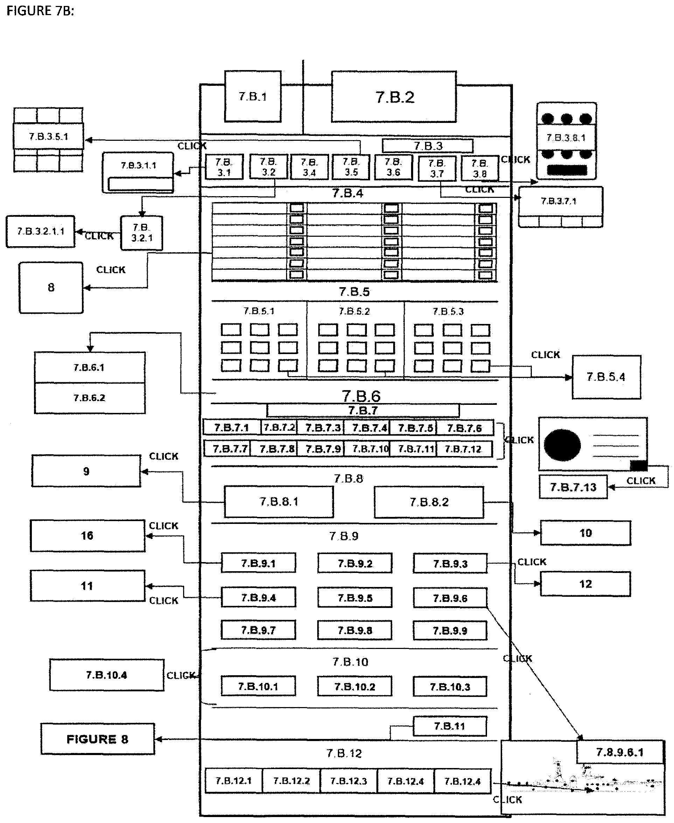

5.5 ALL COUNTRIES BUTTON
7.A.1 HOLOGRAM BOX
7.A.2 SHIP HOLOGRAM
7B REFERS TO FIGURE 7B IN THE DOCUMENT

### Legend for Figure 7B:

| | |
|---|---|
| 7.B.1 ACTUAL PHOTO OF ASSET | 7.B.6 GPS COORDINATES (CHANGES FOR EVERY HOLOGRAM OF EVERY ASSET AS PER LIVE LOCATION) |
| 7.B.2 DETAILS OF THE SHIP | |
| 7.B.3 COMMUNICATION SECTION | 7.B.6.1 ESTIMATED TIME OF ARRIVAL |
| 7.B.3.1 WHATSAPP | 7.B.6.2 DEPARTURE TIME |
| 7.B.3.1.1 TEXT SCREENS | 7.B.7 SENSORS OF THE SHIP |
| 7.B.3.2 INTERNET SEARCH | 7.B.7.1 FUEL |
| 7.B.3.2.1 GOOGLE ICON | 7.B.7.2 NAUTICAL MILES |
| 7.B.3.2.1.1 GOOLE SEARCH | 7.B.7.3 HUMIDITY |
| 7.B.3.3 SPEAKER | 7.B.7.4 WIND |
| 7.B.3.4 MUTE | 7.B.7.5 DEPTH |
| 7.B.3.5 TRANSLATE | 7.B.7.6 WAVES |
| 7.B.3.5.1 CLICK ON ANY LANGAUGE AND AI (ARTIFICIAL INTELLIGENE LANGUAGE TRANSLATOR) CONVERTS NAUTICA TO THAT LANGAUGE | 7.B.7.7 AIR |
| | 7.B.7.8 TEMPARTURE |
| | 7.B.7.9 SPEED |
| 7.B.3.6 EMAIL | 7.B.7.10 POWER |
| 7.B.3.7 SKYPE | 7.B.7.11 ALLTITUDE |
| 7.B.3.7.1 SKYPE FEED OPENS | 7.B.7.12 SEA LEVEL |
| 7.B.3.8 PHONE | 7.B.7.13 EACH OF THE BUTTONS FROM 7.B.7.1 TO 7.B.7.12 IS CLICKABLE AND OPENS A SCREEN WHICH HAS Al BASED ANALYTICS OF EACH SENSOR |
| 7.B.3.8.1 DIALPAD FOR PHONE | |
| 7.B.4 CREW DETAILS | |
| 8 REFERS TO FIGURE 8 IN THE DOCUMENT | |
| 7.B.5 VIDEO FEED | |
| 7.B.5.1 NORMAL VISION | |
| 7.B.5.2 NIGHT VISION | |
| 7.B.5.3 THERMAL VISION | |
| 7.B.5.4 EXPANDS EACH FEED (VIDEO FEED ALSO HAS FACE+ ARM& AMMUNITION DETECTION FOR PASSANGERS & PIRATES) | |

### Legend for Figure 7B:

| | |
|---|---|
| 7.B.8 CARGO DETAILS | 7.8.9.7 LICENSES |
| 7.B.8.1 PASSENGERS | 7.8.9.8 CANTEEN |
| 9 REFERS TO FIGURE 9 IN THE DOCUMENT | 7.8.9.9 OTHERS |
| 7.B.8.2 GOODS | 7.B.10 MANUALS |
| 10 REFERS TO FIGURE 10 IN THE DOCUMENT | 7.B.10.1 OPERATION MANUALS |
| 7.B.9 AREAS OF SHIPS | 7.B.10.2 EMERGENCY MANAUALS |
| 7.B.9.1 SHIP BRIDGE | 7.B.10.3 BLUEPRINTS OF SHIP |
| 16 REFERS TO FIGURE 16 IN THE DOCUMENT | 7.B.10.4 DIGITAL SCANS OF MANUAL OPENS |
| 7.B.9.2 CANTEEN | 7.B.11 DUTY ROSTERS |
| 7.8.9.3 LIVING QUARTER | 8 REFERS TO FIGURE 8 OF THE DOCUMENT |
| 12 REFERS TO FIGURE 12 IN THE DOCUMENT | 7.B.12 COMMUNICATION SECTIONS (WITH OTHER PARTIES) |
| 7.8.9.4 ENGINE ROOM | 7.B.12.1 NAVY |
| 11 REFERS TO FIGURE 11 IN THE DOCUMENT | 7.B.12.2 COAST GUARD |
| 7.8.9.5 MAINTAINENCE | 7.B.12.3 MEDICAL |
| 7.8.9.6 PERSONAL LOCATOR | 7.B.12.4 POLICE |
| 7.8.9.6.1 SCREEN OPENS UP WITH SHOWING EACH PERSONAL ON THE SHIP | 7.B.12.5 IMMIGRATION |
| | 7.8.9.6.1 SCREEN OPENS UP WITH SHOWING EACH PERSONNEL/CREW ON THE SHIP |

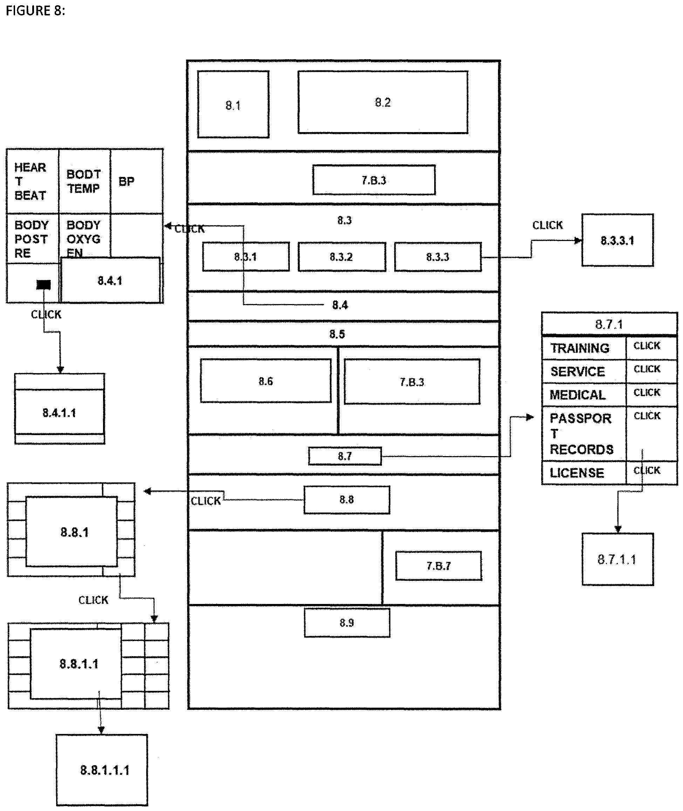

### Legend for Figure 8:

8.1 ACTUAL PHOTO OF CREW MEMBER
8.2 PERSONAL DETAILS OF CREW
7.B.3 REFERS TO COMMUNICATION SECTION OF FIGURE 7
8.3 VIDEO FEED
8.3.1 NORMAL VIEW
8.3.2 THERMAL VIEW 8.3.3 NIGHT VISION VIEW 8.3.3.1 VIDEO FEED SCREEN (AI-ARTIFICIAL INTELLIGENCE BASED FACE+ ARMS/AMMUNATION LOCATOR
8.4 VITALS
8.4.1 DETAILED VITALS OF CREW MEMBER
8.4.1.1 DETAILED AI-ARTIFICIAL INTELLIGENCE ANALYTICS SCREEN GIVING WEEKLY/MONTHLY AND HOUR WISE DATA
8.5 GPS COORDINATES
8.6 RANKING OFFICER DETAILS
7.B.3 REFERS TO COMMUNICATION SECTION OF FIGURE 7
8.7 RECORDS
8.7.1 OPENS UP RECORD OF THE CREW MEMBER
8.7.1.1 DIGITAL SCREEN OPENS UP
8.8 DUTY ROSTER
8.8.1 DAY WISE/ MONTH WISE DUTY SCHEDULE& ROSTERS
8.8.1.1 ATTENDANCE RECORDS OPEN
8.8.1.1.1 DIGITAL SCANS OF ATTENDANCE RECORD OPENS
7.B.7 SENSORS SECREEN FROM FIGURE 7 OF THIS DOCUMENT
8.9 KEY SPECIALITIES OF CREW MEMBER.

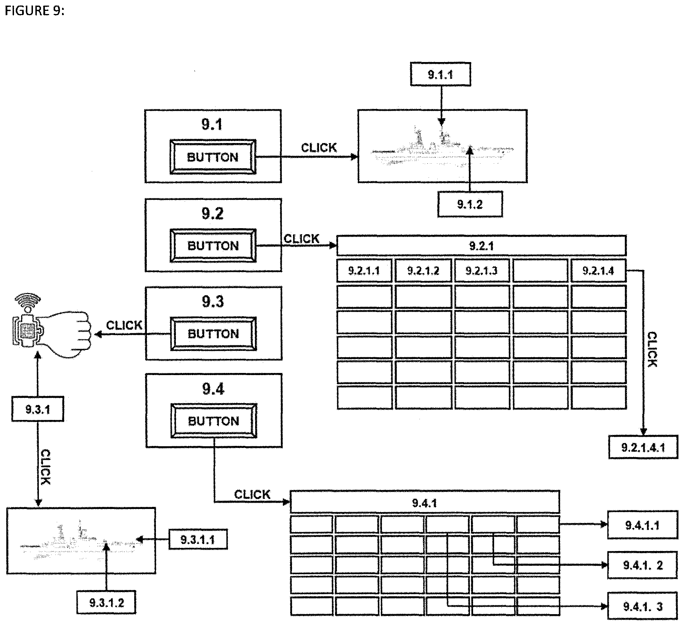

### Legend for Figure 9:

9.1 SHIP PASSENGER DISTIBUTION
9.1.1 BLUEPRINT OF THE SHIP
9.1.2 EACH PASSENGER SHOWN
9.2 SHIP PASSENGER LIST
9.2.1 DETAILS OF PASSENGER
9.2.1.1 NAME
9.2.1.2 AGE
9.2.1.3 NATIONALITY
9.2.1.4 PASSENGER RECORDS SCAN
9.2.1.4.1 DIGITAL SCANS OF PASSENGER RECORDS OPEN UP
9.3 SHIP PASSENGER LOCATOR
9.3.1 EACH OF THE PASSENGER GIVEN A WRIST BAND WITH GPS LOCATOR+RFID TAG
9.3.1.1 BLUE PRINT OF THE SHIP
9.3.1.2 GPS LOCATION OF THE PASSENGER, CLICKING ON IT GIVES DETAILS OF THAT PASSENGER
9.4 SHIP PASSENGER ANALYTICS
9.4.1 Al BASED EACH PASSENGER ANALYTICS (ALL TYPES)
9.4.1.1 HER/HIS SPENDING HABITS
9.4.1.2 PASSENGER FOOD ORDERS
9.4.1.3 AREAS OF SHIP VISITED

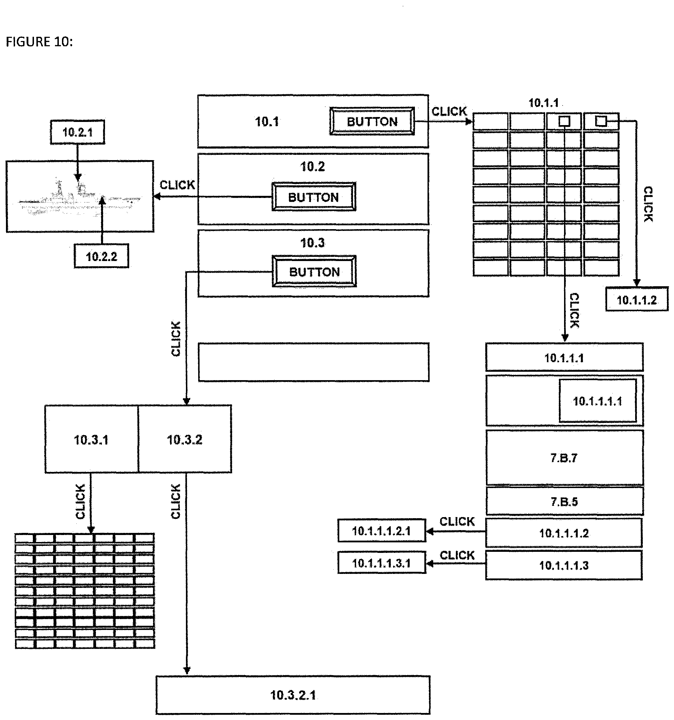

### Legend for Figure 10:

10.1 CARGO LIST
10.1.1 CARGO DETAILS
10.1.1.1 CARGO DETAILS TABLE
10.1.1.1.1 ACTUAL PHOTOS
7.B.7 REFERS TO SENSOR FEED FROM FIGURE 7 IN THE DOCUMENT
7.B.5 REFERS TO VIDEO FEED FROM FIGURE 7 IN THE DOCUMENT
10.1.1.1.2 WEIGHT
10.1.1.1.2.1 WEIGHT IN TONS
10.1.1.1.3 CUSTOM RECORDS
10.1.1.1.3.1 DIGITAL SCANS
10.2 CARGO BLUEPRINT
10.2.1 GPS LOCATION OF CARGO CONTAINER/GOOD
10.2.2 SHIP BLUE PRINT
10.3 CARGO LOADING/UNLOADING
10.3.1 LOADING/UNLOADING SCHEDULES
10.3.2 LOADING/UNLOADING PERFORMANCE
10.3.2.1 LOADING TIME METRICS+ Al ANALYTICS (SCREENS FOR EACH CARGO CONTAINER/GOODS TO BE MADE

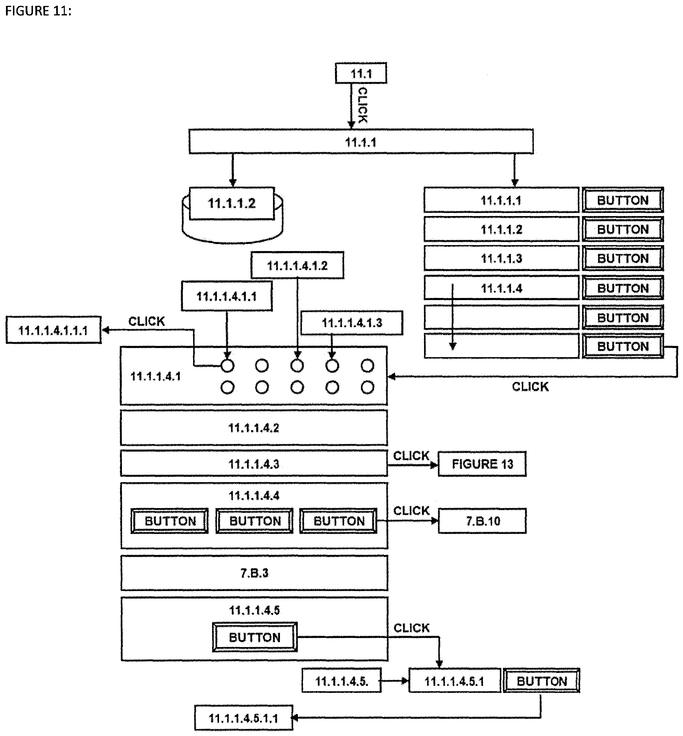

### Legend for Figure 11:

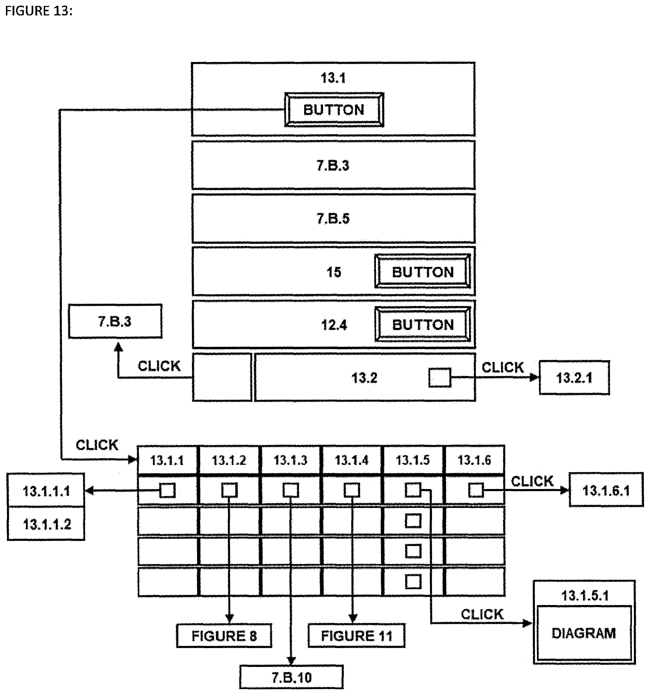

11.1 REFERS TO ENGINE
11.1.1 OPENS TO HOLOGRAMIC SCREEN
11.1.1.1 ENGINE PISTON
11.1.1.2 ENGINE VALVE
11.1.1.3 ENGINE CHAMBER
11.1.1.4 ALL ENGINE PARTS/SECTIONS LISTED
11.1.1.4.1 STATUS SENSORS (ALL TYPES)
11.1.1.4.1.1 GAUGE
11.1.1.4.1.1.1 SCREEN OF THE SENSOR WITH ANALYTICS OPEN
11.1.1.4.1.2 TEMPRATURE
11.1.1.4.1.3 HUMIDITY
11.1.1.4.2 DETAILS OF ENGINE PART
11.1.1.4.3 SERVICE/MAITAINANCE RECORDS
13 REFERS TO FIGURE 13 OF THE DOCUMENT
11.1.1.4.4 MANUALS OF THE ENGINE
7.B.10 REFERS TO MANUAL SECTION OF THE FIGURE 7
7.B.3 REFERS TO COMMUNICATION SECTION OF THE FIGURE 7
11.1.1.4.5 Al BASED ANALYTICS OF ENGINE PART
11.1.1.4.5.1 PARAMETERS TO BE MEASURED FOR ENGINE PARTS PERFORMANCE
11.1.1.4.5.1.1 GRAPHICS, VISUAL DIAGRMAS AND Al ANALYTICS

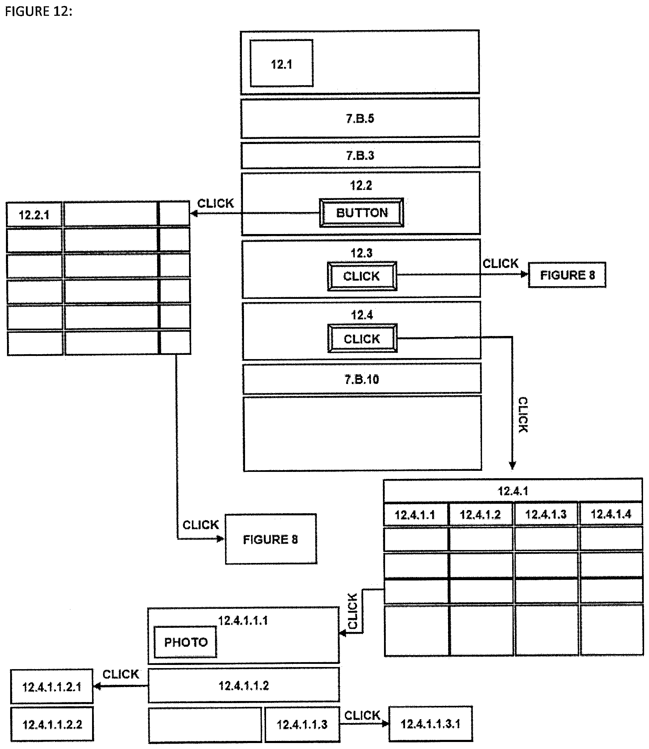

### Legend for Figure 12:

12.1 ACTUAL PHOTO
7.B.5 REFERS TO VIDEO FEED SECTION IN THE FIGURE 7 OF THIS DOCUMENT
7.B.3 REFERS TO COMMUNICATION SECTION IN THE FIGURE 7 OF THIS DOCUMENT
12.2 LIVING QUARTERS ALLOCATION
12.2.1 TABLE FOR DETAILS ABOUT QUARTERS
8 REFERS TO FIGURE 8 OF THE DOCUMENT
12.3 DUTY ROSTERS FOR LIVING QUARTER
8 REFERS TO FIGURE 8 OF THE DOCUMENT
12.4 STOCK FOR LIVING QUARTERS
12.4.1 DETAILS OF ITEM USED FOR LIVING QUARTERS
12.4.1.1 ITEMS
12.4.1.2 ISSUED TO AND BY WHOM
12.4.1.3 USED
12.4.1.4 BALANCE
12.4.1.4.1 DETAILS
12.4.1.4.2 RECORDS
12.4.1.4.2.1 DIGITAL SCANS OF ITEM SPECIFICATION
12.4.1.4.2.2 DIGITAL SCAN OF ITEMS PROCUREMENT
12.4.1.4.3 BUTTON FOR AI
12.4.1.4.3.1 Al BASED ANALYTICS SCREENS
7.B.10 REFERS TO MANUAL SECTION IN FIGURE 7 (MODELLED FOR THIS SECTION

### Legend for Figure 13:

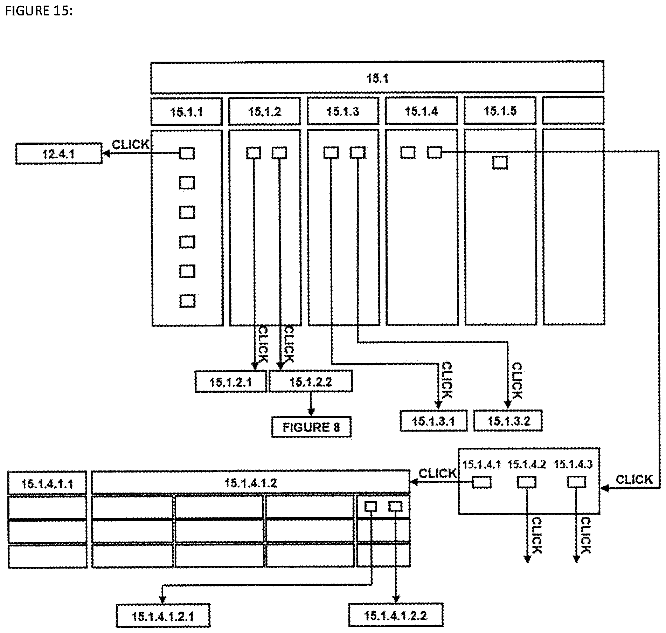

13.1 CURRENT TASKS
13.1.1 TASK
13.1.1.1 DIGITAL SCANS OF TASK ORDER
13.1.1.2 TASK HISTORY
13.1.2 CREW
8 REFERS TO FIGURE 8 IN THE DOCUMENT
13.1.3 MANUALS
7.B.10 REFERS TO MANUAL SECTION OF THE FIGURE (MODELLED FOR THIS SECTION
13.1.4 MECHANICAL COMPONENTS)
11 REFERS TO FIGURE 11 IN THE DOCUMENT
13.1.5 CURRENT STATUS
13.1.5.1 COMPLETION STATUS (PICTURES/DIAGRAMS)
13.1.6 Al ANALYTICS
13.1.6.1 Al BASED ANALYTICS SCREENS
7.B.3 REFERS TO COMMUNICATION SECTION IN THE FIGURE 7.B OF THE DOCUMENT
7.B.5 REFERS TO VIDEO FEED SECTION IN THE FIURE 7.B OF THE DOCUMENT
15 REFERS TO FIGURE 15 OF THE DOCUMENT
12.4 REFERS TO STOCK IN THE FIGURE 12 OF THE DOCUMENT
13.2 MAINTAINENCE RECORDS
13.2.1 RECORDS SCREEN OPEN
7.B.3 COMMUNICATION TO MANFACTURER (COMMUNICATION SECTION IN THE FIGURE 7.8 OF THE DOCUMENT)

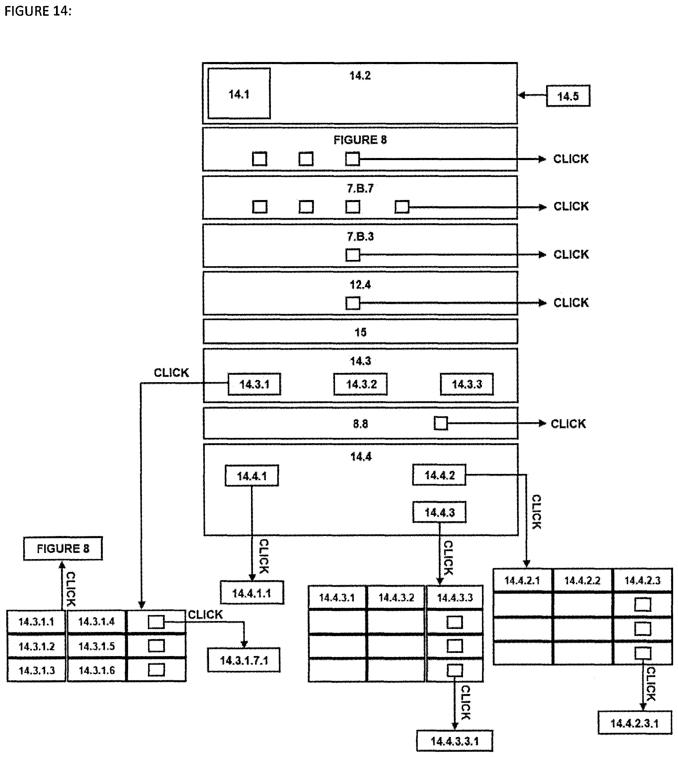

### Legend for Figure 14:

| | |
|---|---|
| 14.1 ACTUAL PHOTO OF CANTEEN | 8.8 REFERS TO DUTY ROSTER IN FIGURE 8 OF THE DOCUMENT |
| 14.2 DETAILS OF GPS COORDINATES | 14.4 SECTION DETAILS |
| 8 REFERS TO FIGURE 8 FROM DOCUMENT (CREW SECTION) | 14.4.1 CANTEEN BLUEPRINT |
| 7.B.7 REFERS TO SENSOR SECTION FROM FIGURE 7 IN THE DOCUMENT | 14.4.1.1 SEATING PLAN OF CANTEEN |
| 7.B.3 REFERS TO COMMUNICATION SECTION FROM FIGURE 7 IN THE DOCUMENT | 14.4.2 FOOD WASTAGE |
| | 14.4.2.1 ITEM |
| 12.4 REFES TO CANTEEN STOCK FROM SECTION IN THE FIGURE 12 OF THE DOCUMENT | 14.4.2.2 WASTE |
| | 14.4.2.3 AI |
| 15 REFERS TO ISSUING& DELIVERY SCHEDULE IN FIGURE 15 OF THE DOCUMENT | 14.4.2.3.1 AI BASED ANALYTICS |
| | 14.4.3 FOOD CONSUMPTION |
| 14.3 MENU | 14.4.3.1 ITEM |
| | 14.4.3.2 WASTE |
| 14.3.1 DAILY | 14.4.3.3 AI |
| 14.3.1.1 TO 14.3.1.3 CREW COOKS | |
| 8 REFERS TO CREW SECTION IN FIGURE 8 OF THE DOCUMENT | 14.4.3.3.1 AI BASED ANALYTICS |
| | 14.5 HOLOGRAM BOX |
| 14.3.1.4 BREAKFAST | |
| 14.3.1.5 LUNCH | |
| 14.3.1.6 DINNER | |
| 14.3.1.7 FEEDBACK AND SURVEY REPORTS | |
| 14.3.2 WEEKLY | |
| 14.3.3 MONTHLY | |

### Legend for Figure 15:

15.1 ISSUING AND DELIVERIES SCHEDULE
15.1.1 ITEM
12.4.1 REFERS TO SECTION UDER ITEMS IN FIGURE 12 OF THE DOCUMENT
15.1.2 ISSUED TO
15.1.2.1 DIGITAL SCANS OF RECORDS
15.1.2.2 ISSUED TO PERSON DETAILS
8 REFERS TO CREW SECTION IN FIGURE 8 OF THE DOCUMENT
15.1.3 IN CHARGE DETAILS
15.1.3.1 DIGITAL SCANS OF RECORDS OPEN
15.1.3.2 IN CHARGE PERSON FROM FIGURE 8 OPENS FROM THIS DOCUMENT
15.1.4 DELIVERIES SCHEDULE
15.1.4.1 DAY
15.1.4.1.1 ITEM
15.1.4.1.2 DELIVERY SCHEDULES
15.1.4.1.2.1 Al BASED ANALYTICS SCREEN PARAMETERS
15.1.4.1.2.2 DIGITAL SCANS OF ALL RECORDS
15.1.4.2 MONTH (CLICKABLE)
15.1.4.3 YEAR (CLICKABLE)
15.1.5 BALANCE

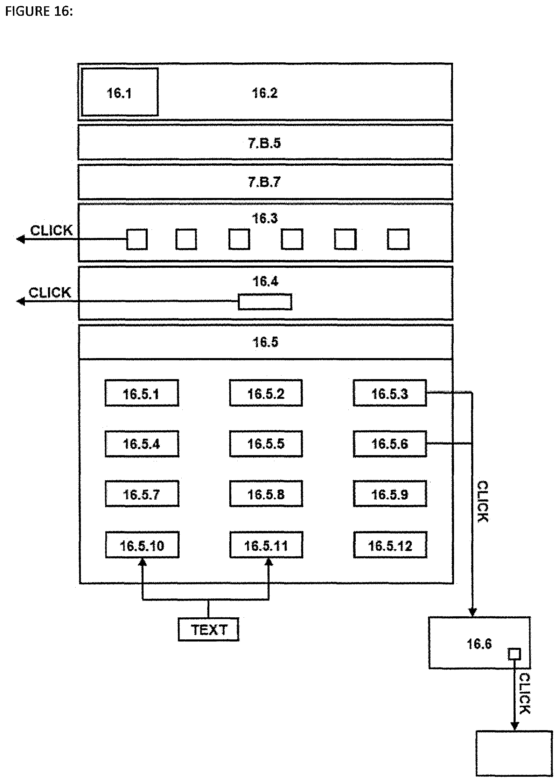

### Legend for Figure 16:

16.1 REFERS TO ACTUAL PHOTO OF BRIDGE
16.2 DETAILS OF BRIDGE
7.B.5 REFERS TO VIDEO FEED SECTION OF FIGURE 7 IN THE DOCUMENT
7.B.7 REFERS TO COMMUNICATION SECTION OF FIGURE 7 IN THE DOCUMENT
16.3 CREW DETAILS (EACH BUTTON IS CLICKABLE OF EVERY CREW)
16.4 DUTY ROSTERS (EACH BUTTON IS CLICKABLE)
16.5 BRIDGE OPERATIONS
16.5.1 NAVIGATION
16.5.2 ANTI COLLISION
16.5.3 ROUTE PLOTTING
16.5.4 SHIP SYSTEMS
16.5.5 WEATHER & SEA CONDITIONS
16.5.6 NAUTICA CENTRAL COMMAND
16.5.7 TO 16.5.12 ARE PORGRAMMABLE BUTTONS FOR OTHER OPERATIONS
16.6 ALL BUTTONS FROM 16.5.1 TO 16.5.12 ARE CLICKABLE AND OPEN TO A NEW SCREEN GIVING DETAILS ABOUT EACH OPERATIONS

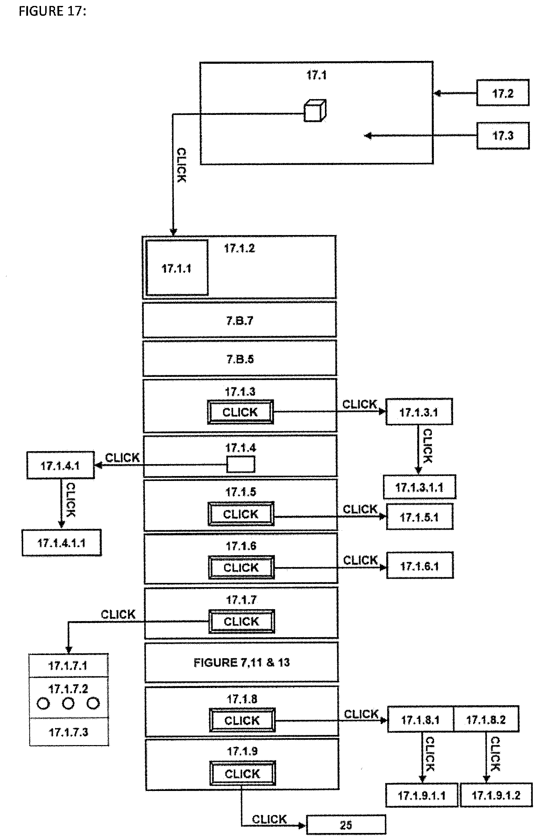

### Legend for Figure 17:

| | |
|---|---|
| 17.1 HOLOGRAM OF A BUOY | 7,11,13 REFERS TO MANUAL SECTION IN THESE FIGURES (MODELLED FOR THIS SECTION) |
| 17.1.1 ACTUAL PHOTO OF BUOY | |
| 17.1.2 DETAILS ABOUT BUOY | 17.1.8 WARNING LIGHT SYSYTEM |
| 7.B.7 SENSOR FEED FROM FIGURE 7 OF THE DOCUMENT | 17.1.8.1 ON |
| 7.B.5 VIDEO CAMERA FEED FROM FIGURE 7 OF THE DOCUMENT | 17.1.8.1.1 WARNING LIGHTS CAN BE SWITCHED ON |
| 17.1.3 TSUNAMI WARNING SYSTEMS | 17.1.8.2 OFF |
| 17.1.3.1 SEA LEVEL LIVE ANALYTICS FOR SUNAMI | 17.1.8.1.2 WARNING LIGHTS CAN BE SWITCHED OFF |
| 17.1.3.1.1 AI BASED ANALYTICS FOR TSUNAMI | 17.1.9 AUTONOMOUS FLOAT OF BUOY |
| | 25 REFERS TO FIGURE 25 OF THE DOCUMENT |
| 17.1.4 WATER/SEA SWELL PERIODS | 17.2 HOLOGRAM OF BUOY |
| 17.1.4.1 WATER SWELL PERIODS ANALYTICS | 17.3 WATER HOLOGRAM |
| 17.1.4.2 Al BASED ANALYTICS SCREEN | |
| 17.1.5 WAVE HEIGHTS | |
| 17.1.5.1 SAME AS 17.1.4.1 (SWEEL PERIODS ANALYTICS BUT FOR WAVE HEIGHTS) | |
| 17.1.6 UNDER WATER CURRENTS | |
| 17.1.6.1 SAME AS 17.1.4.1 (SWEEL PERIODS ANALYTICS BUT FOR WATER CURRENTS) | |
| 17.1.7 SOLAR POWER OF BUOY | |
| 17.1.7.1 GAUGES SHOWING BATTERY | |
| 17.1.7.2 BATTERY | |
| 17.1.7.3 RETURN TO CHARGE | |

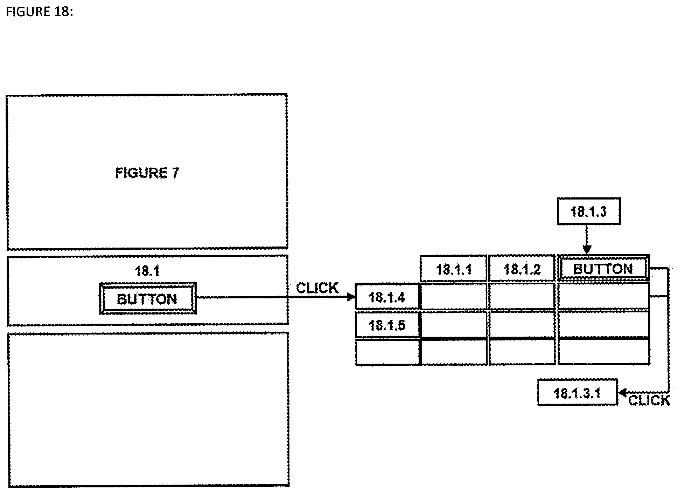

### Legend for Figure 18:

7 REFERS TO SHIP SECTION OF THE FIGURE 7 IN THIS DOCUMENT
18.1 WEIGHT METRICS
18.1.1 ACTUAL WEIGHT
18.1.2 PULLED WEIGHT
18.1.3 BUTTONS FOR Al ANALYTICS
18.1.3.1 Al BASED ANALYTICS SCREEN OPENS UP
18.1.4 SHIP 1
18.1.5 SHIP 2

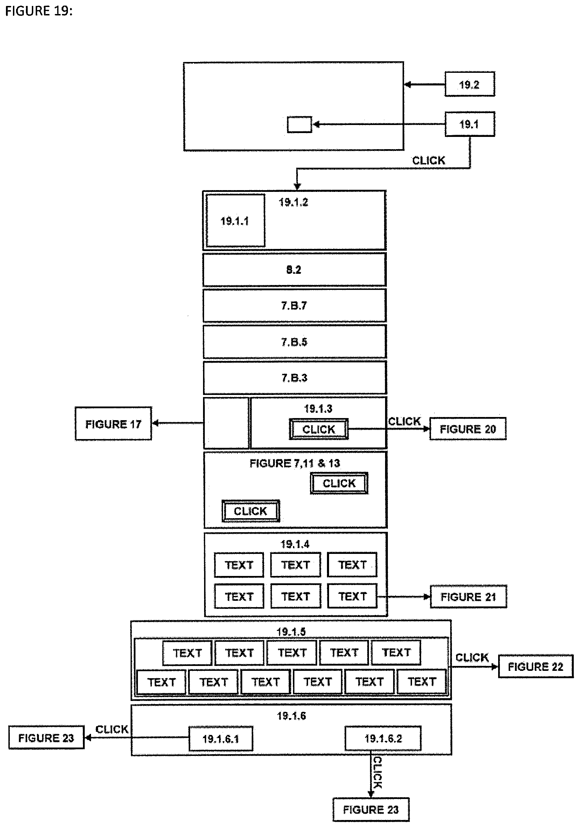

### Legend for Figure 19:

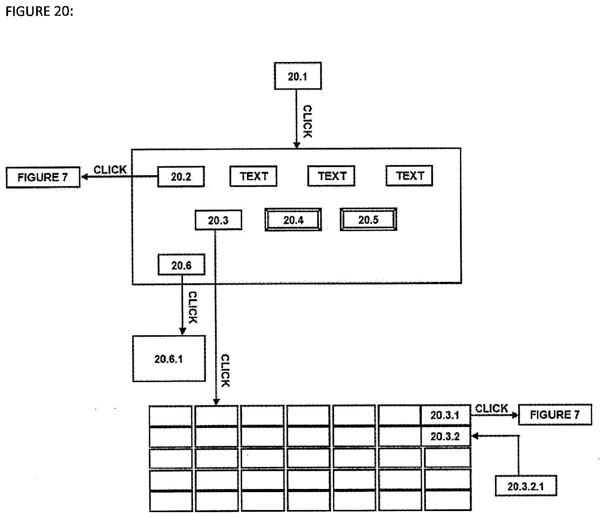

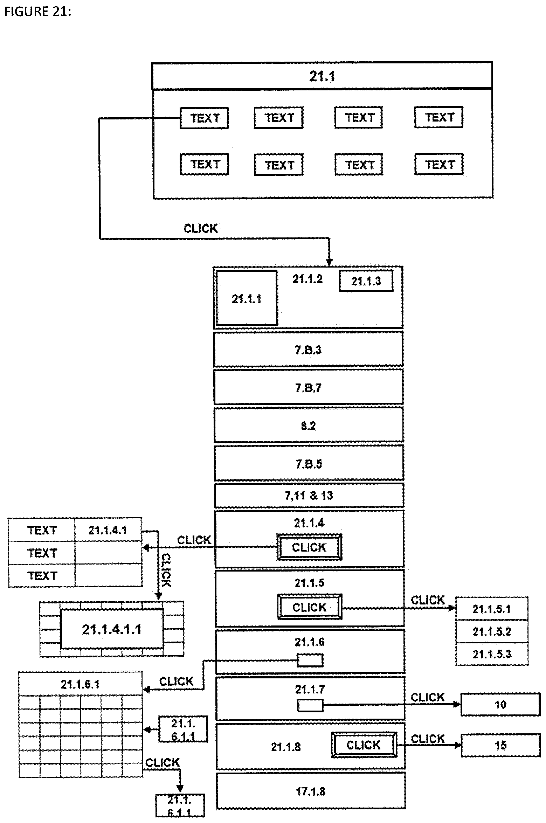

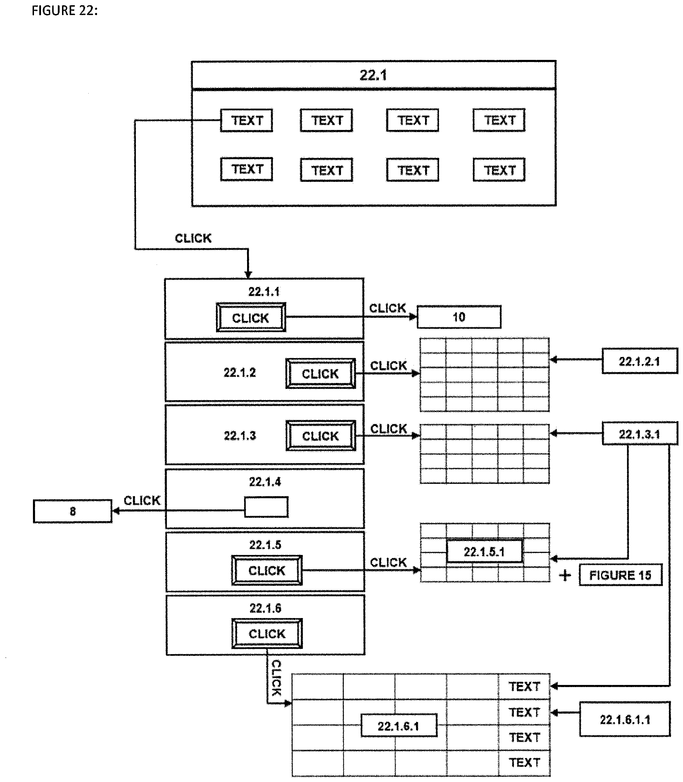

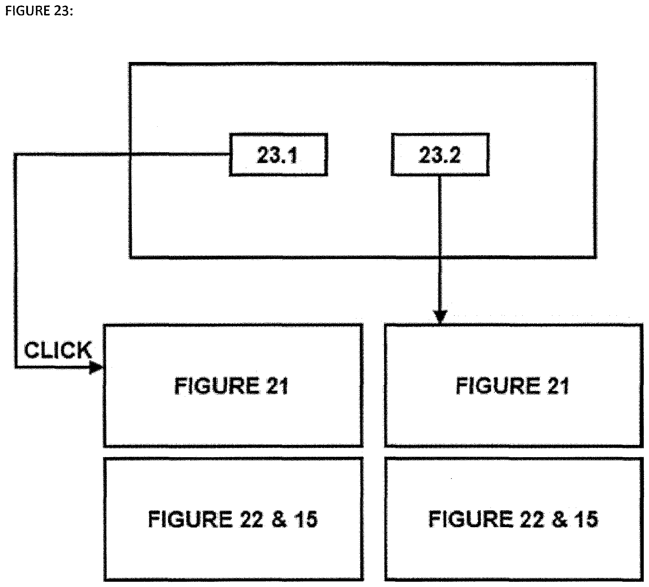

19.1 HOLOGRAM OF PORT BERTH
19.1.1 ACTUAL PHOTO
19.1.2 DETAILS OF BERTH
8.2 CREW FROM FIGURE 8 OF THIS DOCUMENT
7.B.7 REFERS TO SENSORS FROM FIGURE 7 OF THIS DOCUMENT
7.B.5 REFERS TO VIDEO FEED FROM FIGURE 7 OF THIS DOCUMENT
7.B.3 REFERS TO COMMUNICATION SECTION IN THE FIGURE 7 OF THIS DOCUMENT
19.1.3 DOCKING SCHEDULE
17 REFERS TO FIGURE 17 OF THE DOCUMENT
20 REFERS TO FIGURE 20 OF THE DOCUMENT
7, 11 & 13 REFERS TO FIGURE 7,11 & 13 OF THE MANUAL SECTIONS OF THESE FIGURES
19.1.4 CRANES SECTION
19.14.1 CLICKABLE BUTTON WHICH TAKES TO FIGURE 21
19.1.5 CARGO CAPABILITY (MAPABLE FOR VARIOUS KINDS OF CARGOS)
22 REFERS TO FIGURE 22 OF THE FIGURE
19.1.6 CONVEYNOR BELT
19.1.6.1 CONVEYNOR BELT CONTAINER
23 REFERS TO FIGURE 23 OF THE DOCUMENT
19.1.6.2 CONVEYNOR BELT MATERIALS
23 REFERS TO FIGURE 23 OF THE DOCUMENT
19.2 WATER HOLOGRAM

### Legend for Figure 20:

20.1 DOCKING SCHEDULE SCREEN HOLOGRAM
20.2 MAPABLE BUTTON FOR SHIPS
7 REFERS TO FIGURE 7 OF THE DOCUMENT
20.3 DAY WISE SCHEDULE
20.3.1 SHIP 1 DETAILS
7 REFERS TO FIGURE 7 OF THE DOCUMENT
20.3.2 SHIP 2 DETAILS
20.3.2.1 DOCKING SCHEDULE SCREENS OPEN
20.4 MONTH WISE SCHEDULE
20.5 YEARLY SCHEDULE
20.6 Al BASED ANALYTICS
20.6.1 Al BASED ANALYTICS

### Legend for Figure 21:

21.1 CRANES SCREEN; ALL CRANES ARE MAPABLE HERE
21.1.1 ACTUAL PHOTO
21.1.2 DETAILS OF CRANE
21.1.3 GPS COORDINATES OF CRANE
7.B.3 REFERS TO VIDEO FEED IN FIGURE 7 OF THE DOCUMENT OF THIS DOCUMENT
7.B.7 REFERS TO COMMUNICATION FEED IN FIGURE 7 OF THE DOCUMENT OF THIS DOCUMENT
8.2 REFERS TO CREW SECTION OF THE FIGURE 8 OF THIS DOCUMENT
7.B.5 SENSORS FORM FIGURE 7 OF THE DOCUMENT OF THIS DOCUMENT
7,11 & 13 REFERS TO FIGURE 7,11 & 13 OF THE MANUAL SECTIONS OF THESE FIGURES
21.1.4 CRANE SCHEDULES
21.1.4.1 DAY, MONTH AND YEAR WISE SCHEDULES
21.1.4.1.1 DETAILS OF EACH PORTION
21.1.5 LOAD DETAILS
21.1.5.1 LOAD SENSOR SCREEN
21.1.5.2 CURRENT LIFTING
21.1.5.3 WIGHT REMISSIBLE LIMIT
21.1.6 DISPATCH RATE
21.1.6.1 PARAMETERS
21.6.1.1 Al PARAMETERS SCREEN OPEN
21.1.7 CONTAINERS ON CRANE
10 REFERS TO FIGURE 10 OF THE DOCUMENT (MODELLED FOR THIS SECTION)
21.1.8 DELIVERY SCHEDULES
15 REFERS TO FIGURE 15 OF THE DOCUMENT
17.1.8 WARNING LIGHT SYSTEMS (REFER TO FIGURE 17)

### Legend for Figure 22:

22.1 CARGO CAPABILITY SCREEN
22.1.1 CARGO DETAILS
10 REFERS TO FIGURE 10 OF THE DOCUMENT
22.1.2 DISPATCH CAPACITY
22.1.2.1 OPENS TO SCREEN SHOWING ALL PARAMETERS/INFORMATION/METRICS
22.1.3 DISPATCH METRICS
22.1.3.1 OPENS TO SCREEN SHOWING ALL PARAMETERS/INFORMATION/METRICS
22.1.5.1 OPENS TO SCREEN SHOWING ALL PARAMETERS/INFORMATION/METRICS
15 REFERS TO FIGURE 15 OF THE DOCUMENT
22.1.6.1 TABLE SHOWING ALL PARAMETERS/INFORMATION/METRICS
22.1.6.1.1 OPENS TO SCREEN SHOWING ALL PARAMETERS/INFORMATION/METRICS
22.1.4 CREW HANDLING DISPATCH
8 REFERS TO FIGURE 8 OF THE DOCUMENT
22.1.5 DISPATCH/ DELIVERY SCHEDULES
22.1.5.1 OPENS TO SCREEN SHOWING ALL PARAMETERS/INFORMATION/METRICS
15 REFERS TO FIGURE 15 OF THE DOCUMENT
22.1.6 DISPATCH ANALYTICS
22.1.6.1 TABLE SHOWING ALL PARAMETERS/INFORMATION/METRICS
22.1.6.1.1 OPENS TO SCREEN SHOWING ALL PARAMETERS/INFORMATION/METRICS

### Legend for Figure 23:

23.1 CONVEYNOR BELT CONTAINERS
21 REFERS TO ALL FIGURE RELATED TO CONVEYNOR BELT 21 IN THE DOCUMENT
22 & 15 OPEN UPS CONVEYNOR BLET IN THE DOCUMENT
23.2 CONVEYNOR BELT MATERIALS
21 REFERS TO ALL FIGURE RELATED TO CONVEYNOR BELT 21 IN THE DOCUMENT
22 & 15 OPEN UPS CONVEYNOR BLET IN THE DOCUMENT

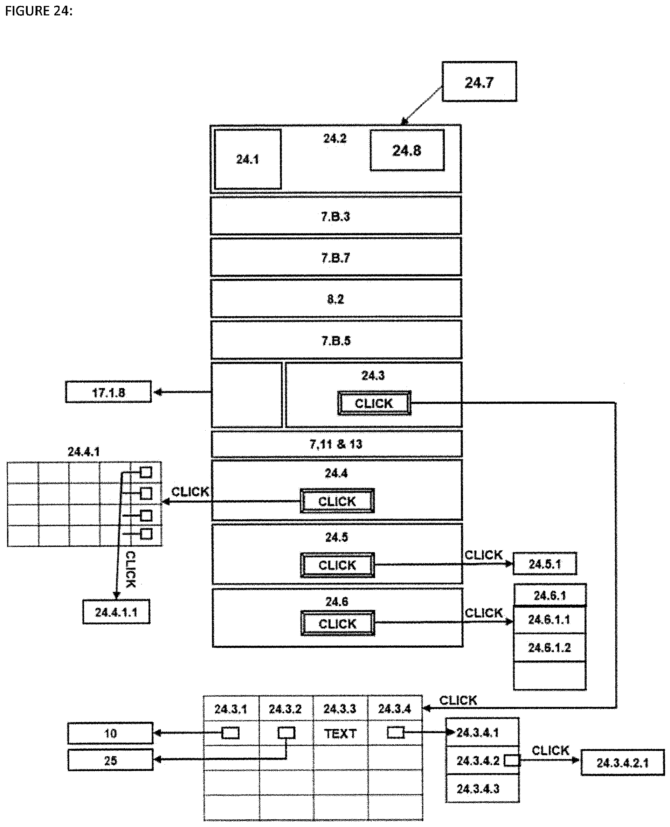

### Legend for Figure 24:

| | |
|---|---|
| 24.1 PHOTO OF THE WEIGH BRIDGES | 24.3.4.2 DIGITAL SCANS |
| 24.2 DETAILS OF WEIGH BRIDGES | 24.3.4.2.1 SCANS OF RECORDS OPEN |
| 7.B.3 REFERS TO VIDEO FEED IN FIGURE 7 OF THE DOCUMENT OF THIS DOCUMENT | 24.3.4.3 ENTRY/EXIT REGISTER |
| | 7,11 & 13 REFERS TO MANUAL SECTION OF |
| 7.B.7 REFERS TO COMMUNICATION FEED IN FIGURE 7 OF THE DOCUMENT OF THIS DOCUMENT | FIGURE 7,11 & 13 OF THE DOCUMENT |
| | 24.4 CUSTOM RECORDS |
| 8.2 REFERS TO CREW SECTION OF THE FIGURE 8 OF THIS DOCUMENT | 24.4.1 REFERS TO ITEMS |
| | 24.4.1.1 DIGITAL SCANS OF RECORDS |
| 7.B.5 SENSORS FORM FIGURE 7 OF THE DOCUMENT OF THIS DOCUMENT | 24.5 AUTHORIZATION FOR WEIGH BRIDGE USE |
| 24.3 WEIGH BRIDGE DATA | 24.5.1 AUTHORIZATION RECORD OPEN |
| 17.1.8 REFERS TO WARNING LIGHT SYSTEMS DIAGRAMS IN FIGURE 17 OF THIS DOCUMENT | 24.6 BILLING PORTAL |
| | 24.6.1 POINT OF SALES ACCESS |
| 24.3.1 GOODS | 24.6.1.1 BILLING ERP DETAILS |
| 10 REFERS TO FIGURE 10 OF THE DOCUMENT | 24.6.1.2 SCREENS + LIVE BILLLING |
| 24.3.2 VEHICLE | 24.7 HOLOGRAM OF WEIGH BRIDGE AND SCREENS OPEN |
| 25 REFERS TO FIGURE 25 OF THIS DOCUMENT | 24.8 GPS COORDINATES |
| 24.3.3 WEIGHT | |
| 24.3.4 VENDOR | |
| 24.3.4.1 VENDOR DETAILS | |

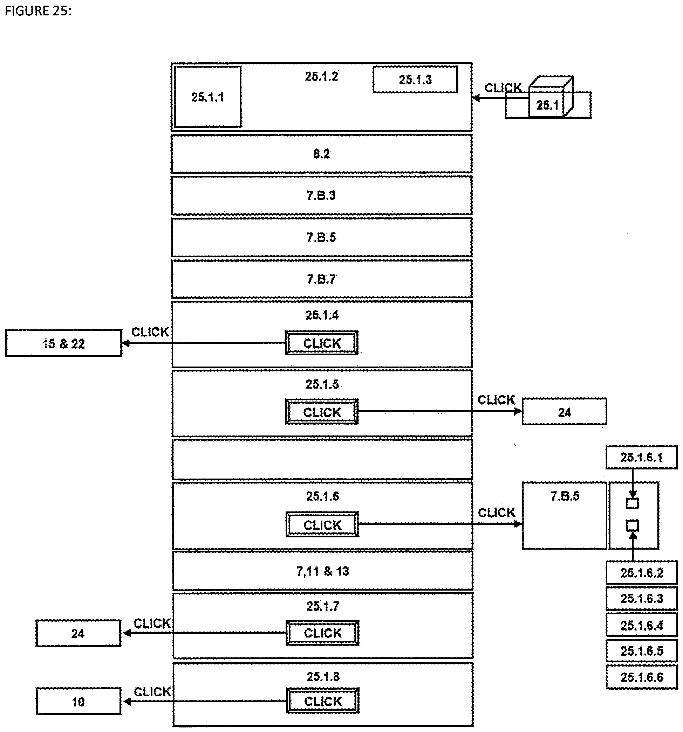

### Legend for Figure 25:

25.1 REFERS TO HOLOGRAMIC IMAGE OF VEHICLE
25.1.1 PHOTO OF VEHICLE
25.1.2 DETAILS OF VEHICLE
25.1.3 GPS COORDINATES
8.2 REFERS TO CREW SECTION OF THE FIGURE 8 OF THIS DOCUMENT
7.B.3 REFERS TO COMMUNICATION FEED IN FIGURE 7 OF THE DOCUMENT OF THIS DOCUMENT
7.B.5 REFERS TO VIDEO FEED IN FIGURE 7 OF THE DOCUMENT OF THIS DOCUMENT
7.B.7 SENSORS FORM FIGURE 7 OF THE DOCUMENT OF THIS DOCUMENT
25.1.4 DELIVERY SCHEDULES/ DISPATCH SCHEDULES
22& 15 REFERS TO FIGURE 22&15 FROM WHICH THE SCEENS WOULD BE TAKEN FROM THIS DOCUMENT
25.1.5 AUTHORIZATION RECORDS
24 REFERS TO AUTHORIZATION PART OF FIGURE 24 ON WHICH THIS PART WILL BE MODELLED
25.1.6 AUTONOMOUS DRIVE
7.B.5 VIDEO FEED TAKEN FROM FIGURE 7 IN THIS DOCUMENT
25.1.6.1 START BUTTON
25.1.6.2 CONTROL SCREEN
25.1.6.3 DESTINATION INPUT
25.1.6.4 MAP LOCATOR
25.1.6.5 CURRENT LOCATION
25.1.6.6 ESTIMATED TIME OF TRAVEL & ARRIVAL
7,11 & 13 REFERS TO MANUAL SECTION IN FIGURE 7,11 & 13
25.1.7 CUSTOM RECORDS
24 REFERS TO FIGURE 24 IN THIS DOCUMENT
25.1.8 CARGO DETAILS
10 REFERS TO FIGURE 10 IN THIS DOCUMENT

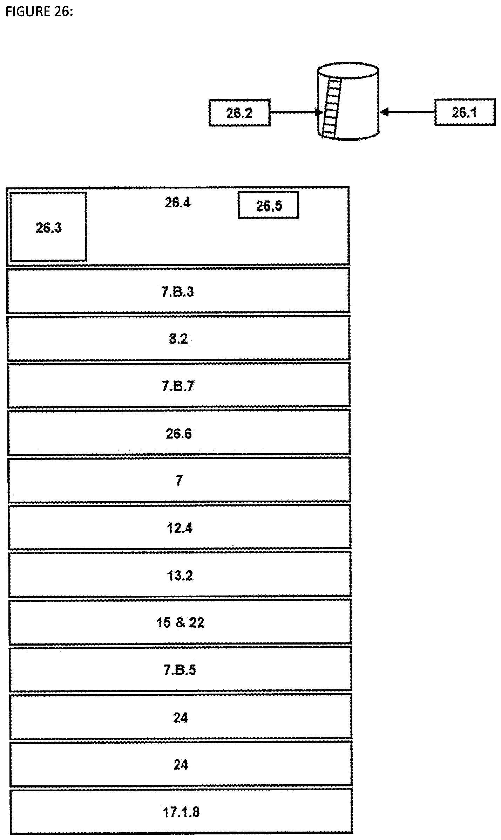

### Legend for Figure 26:

26.1 STORAGE TANK HOLOGRAM
26.2 LADDERS
26.3 ACUTAL PHOTO OF STORAGE TANK
26.4 DETAILS OF STORAGE TANK
26.5 GPS COORDINATES
7.B.3 REFERS TO COMMUNICATION FEED IN FIGURE 7 OF THE DOCUMENT OF THIS DOCUMENT
8.2 REFERS TO CREW SECTION OF THE FIGURE 8 OF THIS DOCUMENT
7.B.7 SENSORS FORM FIGURE 7 OF THE DOCUMENT OF THIS DOCUMENT
26.6 STORAGE TANK FIGURES HERE
7 REFERS TO FIGURE 7 FROM WHICH MANUALS HAVE TO TAKEN AND MODELLED
12.4 REFERS TO STOCK TAKEN FROM FIGURE 12 IN THIS DOCUMENT
13.2 REFERS TO MAINTANENCE RECORDS FROM FIGURE 13 IN THIS DOCUMENT
15& 22 ISSUING AND DELIVERIES SCHEDULE FROM FIGURE 15& 22 OF THIS DOCUMENT
7.B.5 REFERS TO VIDEO FEED IN FIGURE 7 OF THE DOCUMENT OF THIS DOCUMENT
24 REFERS TO CUSTOM RECORDS FROM FIGURE 24 IN THIS DOCUMENT
24 REFERS TO AUTHORIZATION RECORDS FROM FIGURE 24 IN THIS DOCUMENT
17.1.8 REFERS TO WARNING LIGHT SYSTEMS IN FIGURE 17 IN THIS DOCUMENT

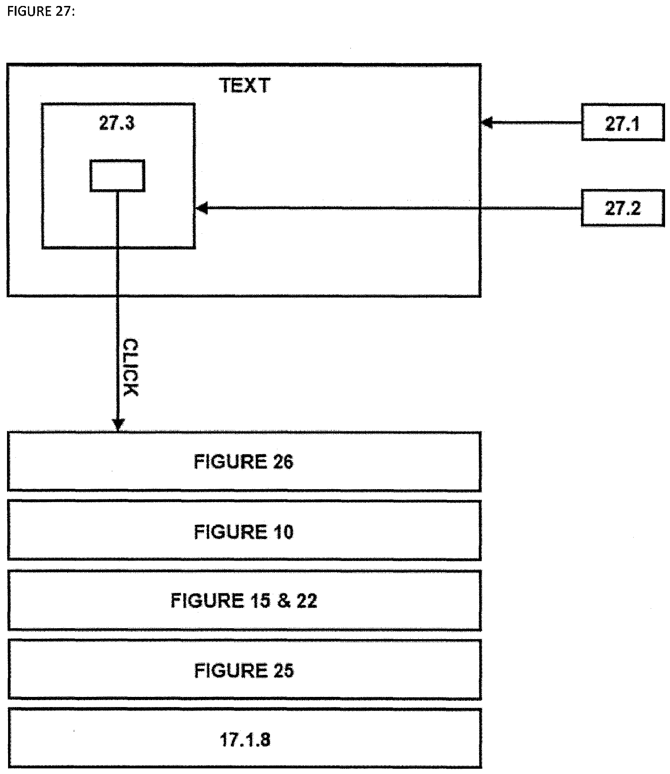

### Legend for Figure 27:

27.1 HOLOGRAM OF PORT OPEN STORAGE-CARGO AREA IN AR-MR
27.2 HOLOGRAM OF PORT IN AR-MR
27.3 OPEN STORAGE AREA OF PORT
26 REFERS FIGURE 26 IN THIS DOCUMENT MAPPED HERE
10 REFERS TO FIGURE 10 OF THIS DOCUMENT
22 REFERS FIGURE 22 OF THIS DOCUMENT
25 REFERS TO VEHICLE REGISTER FROM FIGURE 25 IN THIS DOCUMENT
17.1.8 REFERS TO LIGHT WARNING SYSTEMS FROM FIGURE 17 IN THIS DOCUMENT
**NOTE: SAME ABOVE WILL BE FOR ALL CLOSED STORAGE AREA/ WAREHOUSE/ GODOWNS**

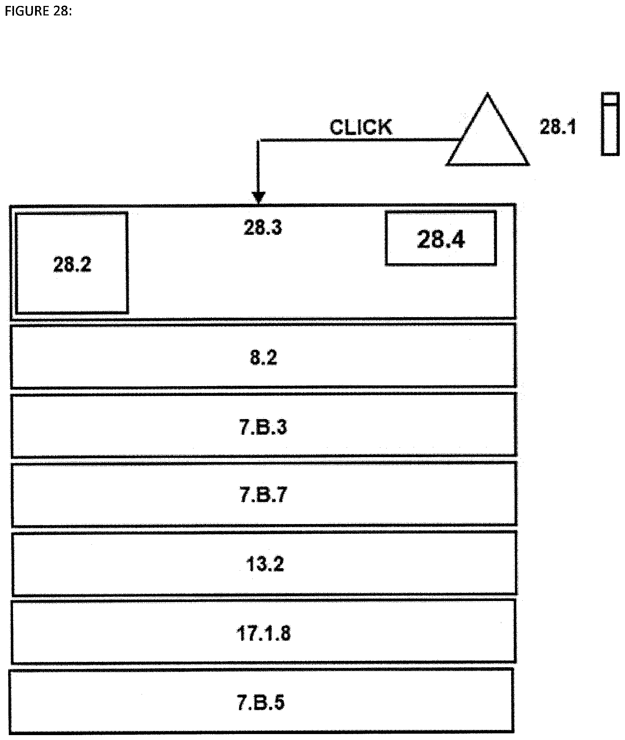

### Legend for Figure 28:

28.1 HOLOGRAM OF LIGHT HOUSE
28.2 ACUTAL PHOTO
28.3 DETAILS
28.4 GPS COORDINATES
8.2 CREW DETAILS FROMFIGURE 8
7.B.3 COMMUNICATION FEED FROM FIGURE 7 IN THIS DOCUMENT
7.B.7 SENSOR FEED FROM FIGURE 7 IN THIS DOCUMENT
13.2 REFERS TO MAINTANENCE RECORDS IN FIGURE 13
17.1.8 REFERS TO WARNING LIGHT SYSTEMS IN FIGURE 17
7.B.5 REFERS TO VIDEO FEED IN THE FIGURE 7

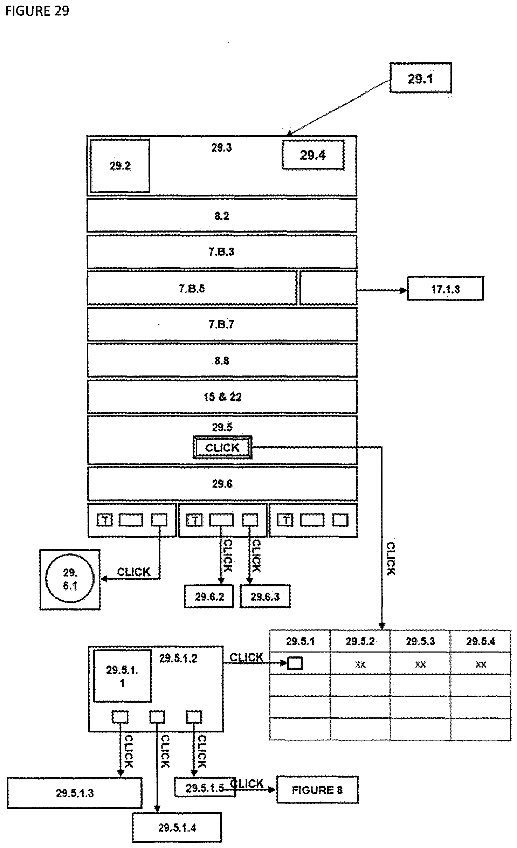

### Legend for Figure 29:

29.1 REFERS TO HOLOGRAM OF SECURITY TOWER
29.2 REFERS TO ACTUAL PHOTO OF THE SECURITY TOWER
29.3 DETAILS ABOUT THE SECURITY TOWER
29.4 GPS COORDINATES
8.2 REFERS TO CREW SECTION OF THE FIGURE 8 IN THIS DOCUMENT
7.B.3 REFERS TO VIDEO FEED SECTION OF THE FIGURE 7 IN THIS DOCUMENT
7.B.5 REFERS TO COMMUNICATION SECTION OF THE FIGURE 7 IN THIS DOCUMENT
17.1.8 REFERS TO WARNING LIGHT SYSTEM SECTION OF THE FIGURE 17 IN THIS DOCUMENT
7.B.7 REFERS TO SENSORS IN THE FIGURE 7 OF THIS DOCUMENT
8.8 REFERS TO DUTY ROSTER IN THE FIGURE 8 OF THIS DOCUMENT
15 & 22 REFERS TO DELIVERIES SCHEDULE FROM FIGURE 15 & 22 IN THIS DOCUMENT
29.5 AMMUNATION STOCK
29.5.1 ITEM
29.5.1.1 ACUTAL PHOTO
29.5.1.2 DETAILS
29.5.1.3 DIGITAL SCANS OF RECORDS OF ITEM
29.5.1.4 ITEM LOCATOR SENSOR
29.5.1.5 ITEM ISSUED TO
8 REFERS TO CREW SECTION OF THE FIGURE 8 IN THIS DOCUMENT
29.5.2 ISSUED
29.5.3 USED
29.5.4 BALANCE
29.6 TARGET SYSTEMS
29.6.1 TARGET SCREEN
29.6.2 LOAD
29.6.3 FIRE

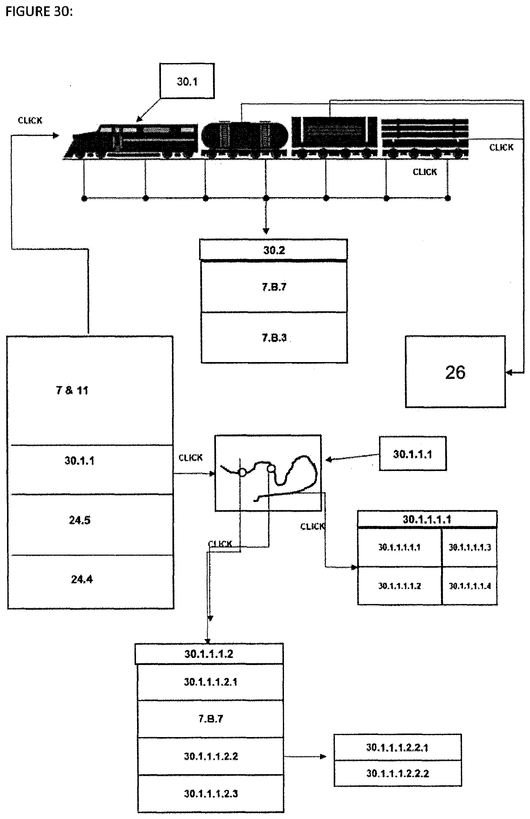

### Legend for Figure 30:

30.1 REFERS TO HOLOGRAM OF TRAIN
26 REFERS TO FIGURE 26 OF THIS DOCUMENT
7&11 REFES TO FIGURE 7&11 OF THIS DOCUMENT MODELLED FOR THIS SECTION
30.1.1 REFERS TO ROUTE MAP
30.1.1.1 HOLOGRAM OF ROUTE
30.1.1.1.1 ROUTE SCREEN OPENS UP
30.1.1.1.1.1 ESTIMATED TIME OF ARRIVAL
30.1.1.1.1.2 DISTANCE TRAVELLED
30.1.1.1.1.3 ROUTE STOPPAGES
30.1.1.1.1.4 OTHER INFORMATION CAN BE MAPPED
30.1.1.1.2 TRAIN STOPPING POINT
30.1.1.1.2.1 ACTUAL PHOTO
7.B.7 COMMUNICATION SYSTEM FROM FIGURE 7 OF THIS DIAGARM
30.1.1.1.2.2 MAP
30.1.1.1.2.2.1 SATTELITE IMAGE
30.1.1.1.2.2.2 GOOGLE MAP
30.1.1.1.2.3 GPS COORDINATES
24.5 AUTHORIZATION RECORDS FROM FIGURE 24 OF THIS DOCUMENT
24.4 CUSTOM RECORDS FROM FIGURE 24 OF THIS DOCUMENT

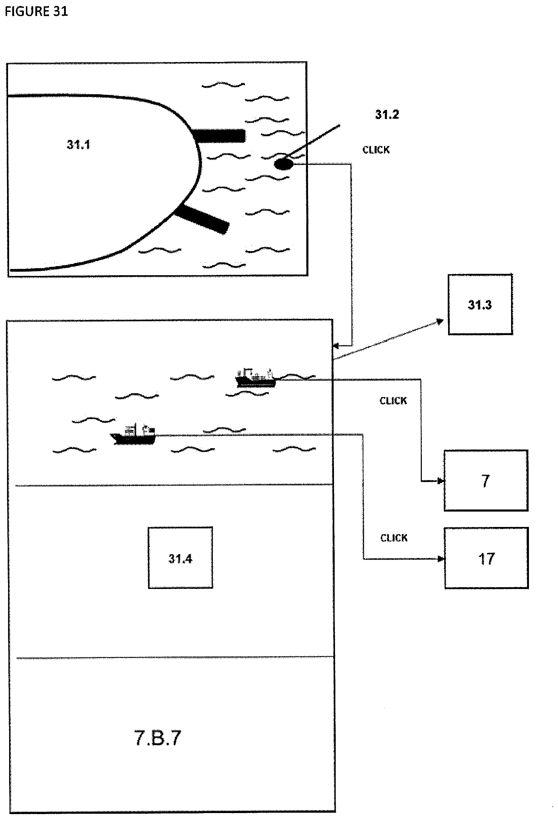

### Legend for Figure 31

31.1 PORT
31.2 AN ICON IN HOLOGRAM REPRESENTING "PORT CHANNEL"
31.3 RADAR FEED OF CHANNEL/OUTER SEA
7 REFERS FIGURE 7 OF THIS DOCUMENT WHICH IS MAPPED FOR ALL SHIPS
17 REFERS TO FIGURE 17 OF THIS DOCUMENT WHICH IS MAPPED FOR ALL BUOYS
31.4 NAVIGATION FEED OF CHANNEL
7.B.7 SENSORS FORM FIGURE 7 MAPPED FOR THIS FIGURE

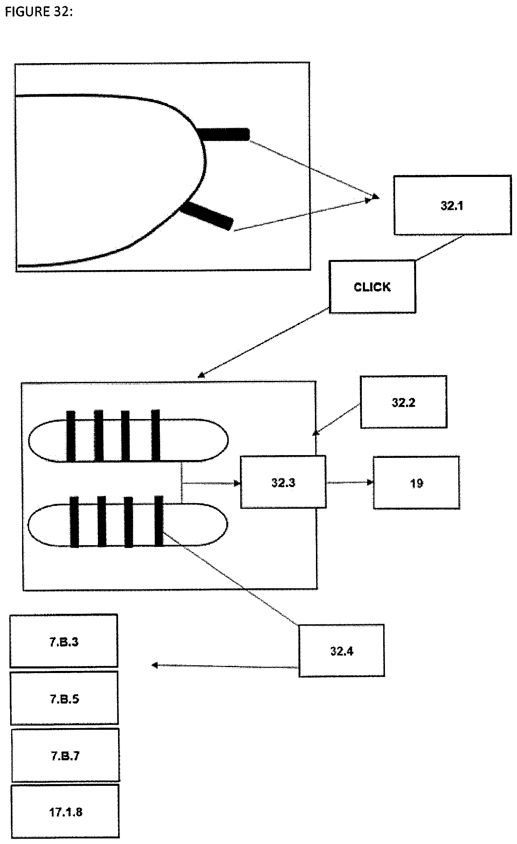

### Legend for Figure 32:

32.1 HOLOGRAM OF JETTY
32.2 SCREEN OPENS IN AR-MR
32.3 BERTH
19 REFERS TO FIGURE 19 OF THE DOCUMENT MAPPED FOR THIS PART
32.4 LAMPPOST
7.B.3 REFERS TO VIDEO FEED SECTION OF THE FIGURE 7 IN THIS DOCUMENT
7.B.5 REFERS TO COMMUNICATION SECTION OF THE FIGURE 7 IN THIS DOCUMENT
7.B.7 REFERS TO SENSORS IN THE FIGURE 7 OF THIS DOCUMENT
17.1.8 REFERS TO WARNING LIGHT SYSTEM SECTION OF THE FIGURE 17 IN THIS DOCUMENT

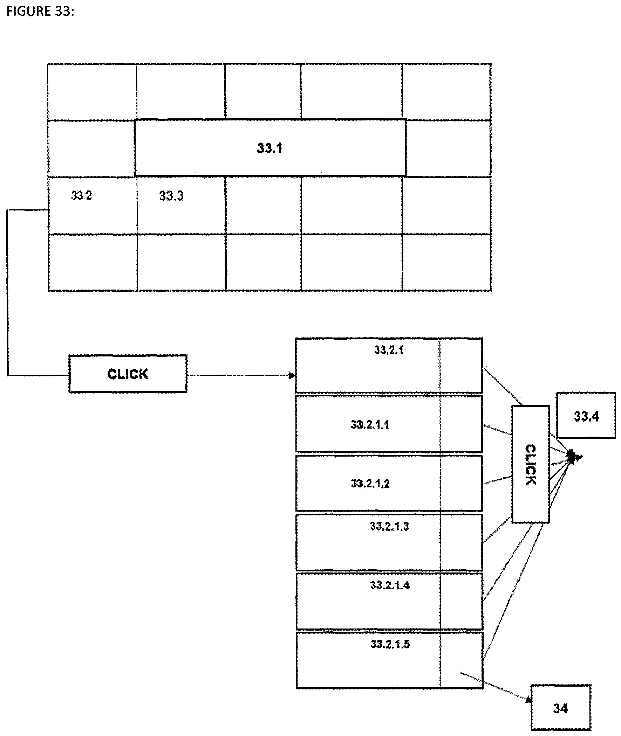

### Legend for Figure 33:

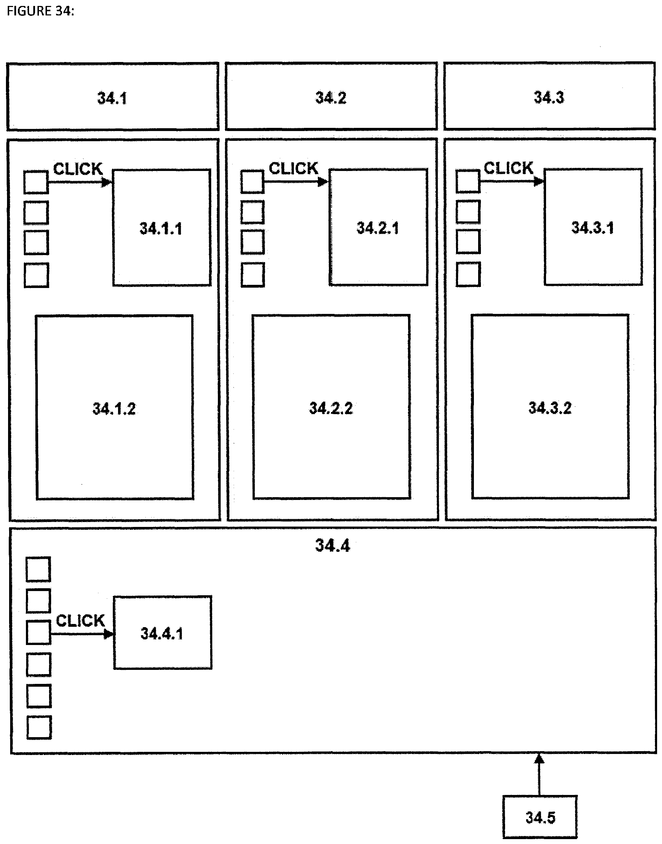

33.1 REFERS TO FIGURE 2 WHICH CAN BE MODIFIED AS PER CHANGES
33.2 SHIP AI
33.2.1 ALL ASSESTS
33.2.1.1 TO 33.2.1.5 MAPABLE FOR VARIOUS SHIPS
33.4 BUTTON TO CLICK FOR EACH ASSET TO GO TO ITS AI-BASED ANALYTICS
34 REFERS TO FIGURE 34 OF THIS DOCUMENT
33.3 PORT Al

### Legend for Figure 34:

34.1 DESCRIPTIVE ANALYTICS AND OPERATIONS
34.1.1 SCREENS OPEN FOR EACH PARAMETER WITH ALL KINDS OF ANALYTICS & OPERATIONS
34.1.2 BUTTONS MAPABLE FOR ALL POSSIBLE AND REQUIRED PARAMETERS LISTED
34.2 PREDICTIVE ANALYTICS AND OPERATIONS
34.2.1 SCREENS OPEN FOR EACH PARAMETER WITH ALL KINDS OF ANALYTICS & OPERATIONS
34.2.2 BUTTONS MAPABLE FOR ALL POSSIBLE AND REQUIRED PARAMETERS LISTED
34.3 PRESECRIPTIVE ANALYTICS AND OPERATIONS
34.3.1 SCREENS OPEN FOR EACH PARAMETER WITH ALL KINDS OF ANALYTICS & OPERATION
34.3.2 BUTTONS MAPABLE FOR ALL POSSIBLE AND REQUIRED PARAMETERS LISTED
34.4 Al COGNITIVE ANALYTICS & OPERATIONS (WARNING: AUTONOMY GIVEN TO Al)
34.4.1 SCREENS OPEN ON CLICK
34.5 HOLOGRAM BOX IN AR-MR
NOTE: SAME HAS TO BE MADE FOR ALL NAUTICA BOXES of ALL DIGITAL ASSETS IN NAUTICA CENTRAL COMMAND

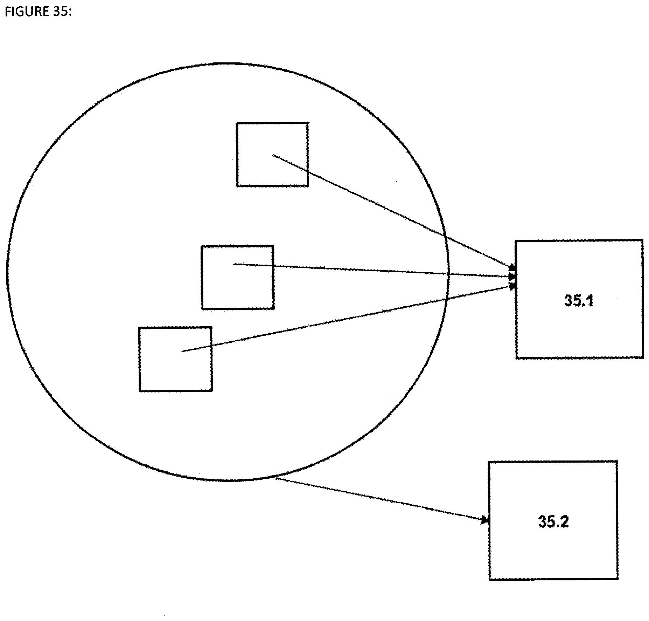

### Legend for Figure 35

35.1 HOLOGRAM OF ALL ASSETS WHICH CAN BE CLICKED TO OPEN THEIR SCREENS
35.2 HOLOGRAM OF ROTATING EARTH
NOTES: ON CLICKING EARTH BUTTON IN NAUTICA CENTAL COMMAND, A 3D HOLOGRAM OF EARTH APPEARS IN AR-MR SHOWING ALL ASSETS PLUGGED INTO NAUTICA.

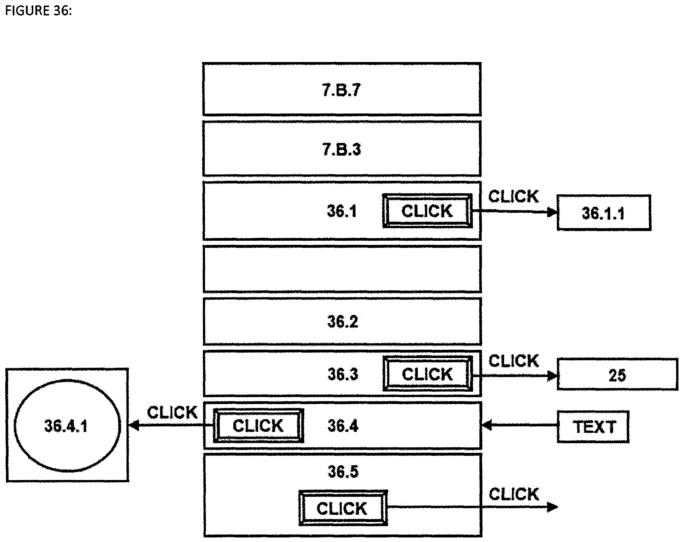

### Legend for Figure 36:

7.B.7 REFERS TO SENSORS FEED FROM FIGURE 7 OF THIS DOCUMENT
7.B.3 REFERS TO VIDEO FEED FROM FIGURE 7 OF THIS DOCUMENT
36.1 LIDAR FEED
36.1.1 LIDAR SCREENS AND FEED OPEN
36.2 SOLAR POWER OF DRONE
36.3 AUTONOMOUS FLIGHT
36.3.1 MAPPED AS PER AUTONOMOUS DRIVE OF FIGURE 25 OF THIS DOCUMENT
36.4 RADAR FEED
36.4.1 RADAR SCREENS OPEN UP
36.5 SONAR FEED
36.5.1 SONAR SCREENS & FEED OPENS UP

### DETAILED DESCRIPTION OF THE INVENTION WITH REFERENCE TO DRAWING/EXAMPLES

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. Although any methods similar or equivalent to those described herein can be used in the practice or testing of embodiments of the present disclosure, the exemplary, methods are now described.

Various modifications to the embodiment will be readily apparent to those skilled in the art and the generic principles herein may be applied to other embodiments. However, one of ordinary skill in the art will readily recognize that the present disclosure is not intended to be limited to the embodiments illustrated, but is to be accorded the widest scope consistent with the principles and features described herein.

As shown in Figure 1, to Start NAUTICA, 1.2 USER (HUMAN/ALIEN/ROBOT) can:
A. USER (HUMAN/ALIEN/ROBOT) Wear SMART Glass /Eyewear (1.1) with Augmented Reality (AR) - Mixed Reality (MR) holographic projection capability
   or
B. 1.2 USER (HUMAN/ALIEN/ROBOT) starts device with Augmented Reality (AR) - Mixed Reality (MR) holographic projection capability

Post Starting NAUTICA, 1.2 USER (HUMAN/ALIEN/ROBOT) sees 2.3 HOLOGRAM BOX IN AR-MR with 2.1 NAUTICA CENTRAL COMMAND and 2.2 NAUTICA ARTIFICIAL INTELLIGENCE COMMAND. 1.3.2 REFERS TO CLICKABLE BUTTON OR "VOICE COMMAND ACTIVATED" BUTTON IN FIGURE 1 OF THE DOCUMENT. The user can also see the physical environment around him in AR-MR. All buttons are clickable in Central command: 2.1.1 EVERY ROW AND COLUMN IS CLICKABLE OF THE CENTRAL COMMAND and 2.1.1 EVERY ROW AND COLUMN IS CLICKABLE OF THE NAUTICA ARTIFICIAL INTELLIGENCE

From Figure 2, User can select any button. For Example, User selects "Ships" button (3.1 REFERS TO SHIPS BASED ON SELECTION IN 2.1) and comes to figure 3 (3.2 HOLOGRAM BOX IN AR-MR). User can select any country (3.1.1 ALL BUTTONS ARE CLIKABLE BUTTON FOR ALL COUNTRIES OF THE WORLD) or even combine all countries by selecting the "World" Button (3.3 BUTTON FOR COMBINING ALL COUNTRIES OF THE WORLD. All screens of Nautica are 3.2 HOLOGRAM BOX IN AR-MR and in Mobile, IOs, Android, tablets versions.

Upon selecting the country in figure 3, 4.1 HOLOGRAMIC IMAGE OF COUNTRY OPENS IN AR-MR as shown in figure 4: 4.1.1 HOLOGRAM OF THE COUNTRY SELECTED. A detailed illustration of figure 4 is shown in figure 5.

In figure 5, the entire selected country's map is shown as a HOLOGRAM MAP OF SELECTED COUNTRY as a 5.1 "IN AIR VIEW" and is broken by NAUTICA into; 5.7 HOLOGRAM OF ALL SHIPS (Ship is an example of a Digital Asset). APPEAR IN BOTH NATIONAL AND INTERNATIONAL WATERS AROUND THAT COUNTRY, 5.8 A COLOURED LINE IN THE HOLOGRAM ALSO SHOWS MARITIME BOUNDARY AROUND THAT COUNTRY, 5.9 RIVERS ARE ALSO SHOWN IN THE HOLOGRAM, 5.10 SHIPS AND BOATS IN THE RIVER. The USER (HUMAN/ALIEN/ROBOT) also has the option buttons of 5.3 BACK BUTTON, 5.4 NAUTICA CENTRAL COMMAND BUTTON, 5.5 ALL COUNTRIES BUTTON. All the Alphabets and Numbers in all screens of NAUTICA are also as HOLOGRAM ALPHABETS AND NUMBER IN AR AND MR. User can click on any assets or boundaries on the hologram and it opens to further screens in AR-MR. **NOTE: ALL COUNTRIES WILL HAVE TO BE MADE IN NAUTICA LIKE ABOVE ILLUSTRATION.**

Figure 6 is an "On ground" hologram projection (6.3 HOLOGRAM PROJECTION OF INDIA ON GROUND) of Figure 5. All holograms appear such as 6.4 HOLOGRAMIC IMAGE OF RIVER, 6.5 HOLOGRAMIC IMAGE OF SHIPS, 6.6 INTERNATIONAL MARITIME BOUNDARY HOLOGRAM. **NOTE: ALL MARITIME SHIPPING, WATERWAYS, PORT MACHINERY, EQUIPMENTS, BUILDING, WORKERS ARE ALL ASSETS. NAUTICA IS CREATING A "DIGITAL TWIN" OF THAT "PHYSICAL ASSET". THE DIGITAL TWIN IS A "LIVE" REPLICATION OF THAT PHYSICAL ASSET.** The User can also view previous Satellite Images of any chosen sector using a SATELLITE IMAGE button or live satellite images button of any chosen sector.

As an example, when User clicks on "Ship Asset" (7.A.2 SHIP HOLOGRAM), further holographic screens open as shown in 7B REFERS TO FIGURE 7B IN THE DOCUMENT. The holographic screens open for 7.B.1 ACTUAL PHOTO OF ASSET, 7.B.2 DETAILS OF THE SHIP, 7.B.3 COMMUNICATION SECTION which further opens screens of 7.B.3.1 WHATSAPP leading to 7.B.3.1.1 TEXT SCREENS, 7.B.3.2 INTERNET SEARCH leading to 7.B.3.2.1 GOOGLE ICON, 7.B.3.2.1.1 GOOLE SEARCH, 7.B.3.3 SPEAKER, 7.B.3.4 MUTE, 7.B.3.5 TRANSLATE with screen of 7.B.3.5.1 CLICK ON ANY LANGAUGE AND Al (ARTIFICIAL INTELLIGENCE LANGUAGE TRANSLATOR) CONVERTS NAUTICA TO THAT LANGAUGE, 7.B.3.6 EMAIL , 7.B.3.7 SKYPE LEADING TO SCREENS OF 7.B.3.7.1 SKYPE FEED OPENS , 7.B.3.8 PHONE LEADING TO SCREENS OF 7.B.3.8.1 DIALPAD FOR PHONE, 7.B.4 CREW DETAILS (REFERS TO FIGURE 8 IN THE DOCUMENT), 7.B.5 VIDEO FEED leading to screens of 7.B.5.1 NORMAL VISION, 7.B.5.2 NIGHT VISION, 7.B.5.3 THERMAL VISION, 7.B.5.4 EXPANDS EACH FEED (VIDEO FEED ALSO HAS FACE+ ARM& AMMUNITION DETECTION FOR PASSANGERS & PIRATES). User can also click and open screens of live 7.B.6 GPS COORDINATES (CHANGES FOR EVERY HOLOGRAM OF EACH ASSET AS PER LIVE LOCATION). User can also click to open screens of 7.B.6.1 ESTIMATED TIME OF ARRIVAL, 7.B.6.2 DEPARTURE TIME. User can also click on Sensor feeds to open further screens such examples as 7.B.7 SENSORS OF THE SHIP leading to 7.B.7.1 FUEL, 7.B.7.2 NAUTICAL MILES, 7.B.7.3 HUMIDITY, 7.B.7.4 WIND, 7.B.7.5 DEPTH, 7.B.7.6 WAVES, 7.B.7.7 AIR, 7.B.7.8 TEMPARTURE, 7.B.7.9 SPEED, 7.B.7.10 POWER, 7.B.7.11 ALLTITUDE, 7.B.7.12 SEA LEVEL.7.B.7.13 EACH OF THE BUTTONS FROM 7.B.7.1 TO 7.B.7.12 IS CLICKABLE AND OPENS A SCREEN WHICH HAS Al BASED ANALYTICS OF EACH SENSOR. User can also click to open further screens of 7.B.8 CARGO DETAILS leading to screens of 7.B.8.1 PASSENGERS (REFERS TO FIGURE 9 IN THE DOCUMENT), 7.B.8.2 GOODS (REFERS TO FIGURE 10 IN THE DOCUMENT), 7.B.9 AREAS OF SHIPS leading to further screens of 7.B.9.1 SHIP BRIDGE (REFERS TO FIGURE 16 IN THE DOCUMENT), 7.B.9.2 CANTEEN, 7.8.9.3 LIVING QUARTER (REFERS TO FIGURE 12 IN THE DOCUMENT), 7.8.9.4 ENGINE ROOM (REFERS TO FIGURE 11 IN THE DOCUMENT), 7.8.9.5 MAINTAINENCE, 7.8.9.6 PERSONAL LOCATOR leading into 7.8.9.6.1 SCREEN OPENS UP WITH SHOWING EACH PERSONAL ON THE SHIP, 7.8.9.7 LICENSES , 7.8.9.8 CANTEEN and all other parameters of the digital asset (7.8.9.9 OTHERS). User can also click to open further screens of 7.B.10 MANUALS leading to screens of 7.B.10.1 OPERATION MANUALS, 7.B.10.2 EMERGENCY MANUALS, 7.B.10.3 BLUEPRINTS OF SHIP, 7.B.10.4 DIGITAL SCANS OF MANUAL OPENS. User can also click to open screens of 7.B.11 DUTY ROSTERS (REFERS TO FIGURE 8 OF THE DOCUMENT), 7.B.12 COMMUNICATION SECTIONS (WITH OTHER PARTIES) which leads to further screens of 7.B.12.1 NAVY, 7.B.12.2 COAST GUARD, 7.B.12.3 MEDICAL, 7.B.12.4 POLICE, 7.B.12.5 IMMIGRATION. User can also click to open 7.8.9.6.1 SCREEN OPENS UP WITH SHOWING EACH PERSONNEL/CREW LOCATION ON THE SHIP. **NOTE: EVERY SINGLE ASSETS HOLOGRAM IS ALSO CLICKABLE. ALL AND EVERY TYPE OF MARITIME, PORT ASSETS OF EVERY COUNTRY IS AVAILABE IN NAUTICA AS A DIGITAL ASSET. EACH AND ALL DIGITAL ASSETS ARE REPRESENTED WITH A SPECIFIC HOLOGRAM OF THAT ASSET IN NAUTICA.** OTHER EXAMPLES OF ASSETS OF ARE (but not limited to): Tug boats, Submarines, Ships, boats, ferries, shipping containers, shipping ports, port berths, buoys, cranes, drones (including sea drones and land drones), Storage tanks, port control centre, pipelines, lighthouse, port distribution area, port entry-exit points, train, open storage areas, port water channel, storage warehouses, Port engineering cargo belt, weigh bridges, jetty, vehicles (cars, jeeps, Trucks, Bike etc), security/guard towers and personnel. More assets can be added to view on more screens.

Figure 8 depicts the hologram screens of a Personnel/crew member. User selects the crew member and screes open for 8.1 ACTUAL PHOTO OF CREW MEMBER, 8.2 PERSONAL DETAILS OF CREW. User can also click to open communication section (7.B.3 REFERS TO COMMUNICATION SECTION OF FIGURE 7), 8.3 VIDEO FEED which leads to further screens of 8.3.1 NORMAL VIEW, 8.3.2 THERMAL VIEW 8.3.3 NIGHT VISION VIEW 8.3.3.1 VIDEO FEED SCREEN (AI- ARTIFICIAL INTELLIGENCE BASED FACE+ ARMS/AMMUNITION LOCATOR. User can also click to open screens for 8.4 VITALS which further opens screens for 8.4.1 DETAILED VITALS OF CREW MEMBER and 8.4.1.1 DETAILED AI-ARTIFICIAL INTELLIGENCE ANALYTICS SCREEN GIVING WEEKLY/MONTHLY AND HOUR WISE DATA. User can click to view live 8.5 GPS COORDINATES. User can also click to open screens of 8.6 RANKING OFFICER DETAILS and communicate with ranking officer (7.B.3 REFERS TO COMMUNICATION SECTION OF FIGURE 7. User can also click to open screens of 8.7 RECORDS which open further screens of 8.7.1 OPENS UP RECORD OF THE CREW MEMBER leading to 8.7.1.1 DIGITAL SCREEN OPENS UP, 8.8 DUTY ROSTER leading to further screens of 8.8.1 DAY WISE/ MONTH WISE DUTY SCHEDULE& ROSTERS, 8.8.1.1 ATTENDANCE RECORDS OPEN, 8.8.1.1.1 DIGITAL SCANS OF ATTENDANCE RECORD OPENS. User can also access sensor feed (7.B.7 SENSORS SECREEN FROM FIGURE 7 OF THIS DOCUMENT) and 8.9 KEY SPECIALITIES OF CREW MEMBER. More parameters can be added to view on more screens.

Figure 9 depicts screens for Ship passengers. User click to open screens of 9.1 SHIP PASSENGER DISTRIBUTION which leads to further screens of 9.1.1 BLUEPRINT OF THE SHIP and 9.1.2 EACH PASSENGER SHOWN. User can click to open screens of 9.2 SHIP PASSENGER LIST which opens further screens of 9.2.1 DETAILS OF PASSENGER leading to screens of 9.2.1.1 NAME, 9.2.1.2 AGE, 9.2.1.3 NATIONALITY, 9.2.1.4 PASSENGER RECORDS SCAN, 9.2.1.4.1 DIGITAL SCANS OF PASSENGER RECORDS OPEN UP. User can also click to locate every single person on the ship using 9.3 SHIP PASSENGER LOCATOR. Every passenger on a ship is given 9.3.1 EACH OF THE PASSENGER GIVEN A WRIST BAND WITH GPS LOCATOR+RFID TAG which can be located using screens of 9.3.1.1 BLUE PRINT OF THE SHIP, 9.3.1.2 GPS LOCATION OF THE PASSENGER, CLICKING ON IT GIVES DETAILS OF THAT PASSENGER. User can also click to open screens of 9.4 SHIP PASSENGER ANALYTICS which opens screens of 9.4.1 Al BASED EACH PASSENGER ANALYTICS (ALL TYPES) leading to screens of 9.4.1.1 HER/HIS SPENDING HABITS, 9.4.1.2 PASSENGER FOOD ORDERS, 9.4.1.3 AREAS OF SHIP VISITED etc. More parameters can be added to view on more screens.

Figure 10 depicts The Cargo Screens. User clicks 7.B.8.2 GOODS to open screens of 10.1 CARGO LIST which further opens 10.1.1 CARGO DETAILS leading to screens of 10.1.1.1 CARGO DETAILS TABLE and 10.1.1.1.1 ACTUAL PHOTOS. User can also access sensor feed of each cargo container (7.B.7 REFERS TO SENSOR FEED FROM FIGURE 7 IN THE DOCUMENT) and video feed of each cargo container (7.B.5 REFERS TO VIDEO FEED FROM FIGURE 7 IN THE DOCUMENT). User can also click to open screens of 10.1.1.1.2 WEIGHT leading to screens of 10.1.1.1.2.1 WEIGHT IN TONS, 10.1.1.1.3 CUSTOM RECORDS leading to screens of 10.1.1.1.3.1 DIGITAL SCANS. User can also click to open 10.2 CARGO BLUEPRINT leading to further screens of live 10.2.1 GPS LOCATION OF CARGO CONTAINER/GOOD, 10.2.2 SHIP BLUE PRINT. User can also click to open screens of 10.3 CARGO LOADING/UNLOADING leading to further screens of 10.3.1 LOADING/UNLOADING SCHEDULES, 10.3.2 LOADING/UNLOADING PERFORMANCE which further opens screens of 10.3.2.1 LOADING TIME METRICS+ Al ANALYTICS (SCREENS FOR EACH CARGO CONTAINER/GOODS. Examples of loading metrics are: loading time, loaded by, loaded on etc.

Figure 11 depicts the illustration of an "Engine Room". User click on 7.8.9.4 ENGINE ROOM and opens holographic screens (11.1.1 OPENS TO HOLOGRAMIC SCREEN) of 11.1.1.1 ENGINE PISTON, 11.1.1.2 ENGINE VALVE, 11.1.1.3 ENGINE CHAMBER, 11.1.1.4 ALL ENGINE PARTS/SECTIONS LISTED. User can select any part of the engine and it opens further screens of that selected part of the engine like 11.1.1.4.1 STATUS SENSORS (ALL TYPES) and its screens 11.1.1.4.1.1 GAUGE with each sensor's own Artificial intelligence-based analytics (11.1.1.4.1.1.1 SCREEN OF THE SENSOR WITH ANALYTICS OPEN), 11.1.1.4.1.2 TEMPRATURE, 11.1.1.4.1.3 HUMIDITY. User can also click to open further screens of 11.1.1.4.2 DETAILS OF ENGINE PART, 11.1.1.4.3 SERVICE/MAITAINANCE RECORDS (REFERS TO FIGURE 13 OF THE DOCUMENT), 11.1.1.4.4 MANUALS OF THE ENGINE (7.B.10 REFERS TO MANUAL SECTION OF THE FIGURE 7). User can also communicate with that engine part manufacturer (7.B.3 REFERS TO COMMUNICATION SECTION OF THE FIGURE 7). User can also open further screens of each engine part's Ai based analytics 11.1.1.4.5 Al BASED ANALYTICS OF ENGINE PART which opens further screens or 11.1.1.4.5.1 PARAMETERS TO BE MEASURED FOR ENGINE PARTS PERFORMANCE and 11.1.1.4.5.1.1 GRAPHICS, VISUAL DIAGRMAS AND Al ANALYTICS. Similarly, every part of a Digital Asset will open in holographic screens of that part as Figure 11.

Figure 12 depicts the Holographic screens of a 7.8.9.3 LIVING QUARTER. User click and opens screens of 12.1 ACTUAL PHOTO, Video feed (7.B.5 REFERS TO VIDEO FEED SECTION IN THE FIGURE 7 OF THIS DOCUMENT), Communication section (7.B.3 REFERS TO COMMUNICATION SECTION IN THE FIGURE 7 OF THIS DOCUMENT). User can also click to open screes of 12.2 LIVING QUARTERS ALLOCATION which opens further screens of 12.2.1 TABLE FOR DETAILS ABOUT QUARTERS (REFERS TO FIGURE 8 OF THE DOCUMENT, Model it like, Bed 1: Name of Occupant which links to Figure 8). User can click to open further screens of 12.3 DUTY ROSTERS FOR LIVING QUARTER (REFERS TO FIGURE 8 OF THE DOCUMENT), 12.4 STOCK FOR LIVING QUARTERS which leads to further screens of 12.4.1 DETAILS OF ITEM USED FOR LIVING QUARTERS leading to screens of 12.4.1.1 ITEMS, 12.4.1.2 ISSUED TO AND BY WHOM, 12.4.1.3 USED, 12.4.1.4 BALANCE which further leads to screens of 12.4.1.4.1 DETAILS 12.4.1.4.2 RECORDS, 12.4.1.4.2.1 DIGITAL SCANS OF ITEM SPECIFICATION , 12.4.1.4.2.2 DIGITAL SCAN OF ITEMS PROCUREMENT, 12.4.1.4.3 BUTTON FOR Al, 12.4.1.4.3.1 AI BASED ANALYTICS SCREENS, 7.B.10 REFERS TO MANUAL SECTION IN FIGURE 7 (MODELLED FOR THIS SECTION).

Figure 13 depicts the holographic screens of 7.8.9.5 MAINTAINENCE. User click to open further screens of 13.1 CURRENT TASKS leading to screens of 13.1.1 TASK which further opens to 13.1.1.1 DIGITAL SCANS OF TASK ORDER, 13.1.1.2 TASK HISTORY. User can also click to open further screens of 13.1.2 CREW (REFERS TO FIGURE 8 IN THE DOCUMENT), 13.1.3 MANUALS (7.B.10 REFERS TO MANUAL SECTION OF THE FIGURE MODELLED FOR THIS SECTION), 13.1.4 MECHANICAL COMPONENTS (REFERS TO FIGURE 11 IN THE DOCUMENT), 13.1.5 CURRENT STATUS which opens further screens of 13.1.5.1 COMPLETION STATUS (PICTURES/DIAGRAMS), 13.1.6 Al ANALYTICS which leads to further screens of 13.1.6.1 Al BASED ANALYTICS SCREENS. User can also communicate using 7.B.3 REFERS TO COMMUNICATION SECTION IN THE FIGURE 7.B OF THE DOCUMENT. User can also click to open screens of video feed 7.B.5 REFERS TO VIDEO FEED SECTION IN THE FIURE 7.B OF THE DOCUMENT. User can also access Issuing and Deliveries schedule of Items and open further screens (REFERS TO FIGURE 15 OF THE DOCUMENT). User can also click to open screens of 12.4 REFERS TO STOCK IN THE FIGURE 12 OF THE DOCUMENT. User can also click to open screens of 13.2 MAINTAINENCE RECORDS which further opens to screens of 13.2.1 RECORDS SCREEN OPEN. User can also communicate to manufacturers by 7.B.3 COMMUNICATION TO MANFACTURER (COMMUNICATION SECTION IN THE FIGURE 7.8 OF THE DOCUMENT).

Figure 14 depicts 7.B.9.2 CANTEEN. User clicks to open screens of 14.1 ACTUAL PHOTO OF CANTEEN, live GPS coordinates 14.2 DETAILS OF GPS COORDINATES. User can click to see Canteen crew screens (REFERS TO FIGURE 8 FROM DOCUMENT CREW SECTION). User can click to see sensor feed of canteen using 7.B.7 REFERS TO SENSOR SECTION FROM FIGURE 7 IN THE DOCUMENT. User can click to communicate with 7.B.3 REFERS TO COMMUNICATION SECTION FROM FIGURE 7 IN THE DOCUMENT. User can also click to see screens of 12.4 REFES TO CANTEEN STOCK FROM SECTION IN THE FIGURE 12 OF THE DOCUMENT. User can also click to open screens of 15 REFERS TO ISSUING& DELIVERY SCHEDULE IN FIGURE 15 OF THE DOCUMENT. User can also click to open screens of 14.3 MENU which further opens to screens of 14.3.1 DAILY and 14.3.1.1 TO 14.3.1.3 CREW COOKS (REFERS TO CREW SECTION IN FIGURE 8 OF THE DOCUMENT, 14.3.1.4 BREAKFAST, 14.3.1.5 LUNCH, 14.3.1.6 DINNER, 14.3.1.7 FEEDBACK AND SURVEY REPORTS. User can click to open further screens of 14.3.2 WEEKLY, 14.3.3 MONTHLY. User can also see screens of duty roster of the canteen (8.8 REFERS TO DUTY ROSTER IN FIGURE 8 OF THE DOCUMENT). User can click to see screens of 14.4 SECTION DETAILS which leads to further screens of 14.4.1 CANTEEN BLUEPRINT, 14.4.1.1 SEATING PLAN OF CANTEEN, 14.4.2 FOOD WASTAGE leading to further screens of 14.4.2.1 ITEM, 14.4.2.2 WASTE, 14.4.2.3 Al which leads to further screens of 14.4.2.3.1 Al BASED ANALYTICS, 14.4.3 FOOD CONSUMPTION which leads to further screens of 14.4.3.1 ITEM , 14.4.3.2 WASTE. User can also click to see Ai based analytics of screens 14.4.3.3 Al and 14.4.3.3.1 Al BASED ANALYTICS.

Figure 15 depicts the screens for 15.1 ISSUING AND DELIVERIES SCHEDULE. User clicks to open further screens 15.1.1 ITEM which leads to 12.4.1 REFERS TO SECTION UDER ITEMS IN FIGURE 12 OF THE DOCUMENT. User can also click to open screens of 15.1.2 ISSUED TO which further leads to screens of 15.1.2.1 DIGITAL SCANS OF RECORDS, 15.1.2.2 ISSUED TO PERSON DETAILS (REFERS TO CREW SECTION IN FIGURE 8 OF THE DOCUMENT). User can also click to open more screens of 15.1.3 IN CHARGE DETAILS which opens to further screens of 15.1.3.1 DIGITAL SCANS OF RECORDS OPEN, 15.1.3.2 IN CHARGE PERSON FROM FIGURE 8 OPENS FROM THIS DOCUMENT. User can click to open screens of 15.1.4 DELIVERIES SCHEDULE which opens further screens of 15.1.4.1 DAY and 15.1.4.1.1 ITEM, 15.1.4.1.2 DELIVERY SCHEDULES which opens screens of 15.1.4.1.2.1 Al BASED ANALYTICS SCREEN PARAMETERS, 15.1.4.1.2.2 DIGITAL SCANS OF ALL RECORDS. User can also click to open screens of 15.1.4.2 MONTH (CLICKABLE), 15.1.4.3 YEAR (CLICKABLE) and 15.1.5 BALANCE.

Figure 16 depicts the screens of the Ships' main bridge or control room. User clicks to open 16.1 REFERS TO ACTUAL PHOTO OF BRIDGE, 16.2 DETAILS OF BRIDGE. User can click to see video feed screens (7.B.5 REFERS TO VIDEO FEED SECTION OF FIGURE 7 IN THE DOCUMENT). User can click to communicate with ship's bridge (7.B.7 REFERS TO COMMUNICATION SECTION OF FIGURE 7 IN THE DOCUMENT). User can click to see all details of crew (16.3 CREW DETAILS (EACH BUTTON IS CLICKABLE OF EVERY CREW). User can click to see screens of 16.4 DUTY ROSTERS (EACH BUTTON IS CLICKABLE), 16.5 BRIDGE OPERATIONS which opens to further screens, for example 16.5.1 NAVIGATION, 16.5.2 ANTI COLLISION, 16.5.3 ROUTE PLOTTING, 16.5.4 SHIP SYSTEMS, 16.5.5 WEATHER & SEA CONDITIONS, 16.5.6 NAUTICA CENTRAL COMMAND. All required parameters can be added with more screens: 16.5.7 TO 16.5.12 ARE PORGRAMMABLE BUTTONS FOR OTHER OPERATIONS. 16.6 ALL BUTTONS FROM 16.5.1 TO 16.5.12 ARE CLICKABLE AND OPEN TO A NEW SCREEN GIVING DETAILS ABOUT EACH OPERATIONS

Figure 17 depicts the hologram screens of a "Buoy". When user clicks on 17.1 HOLOGRAM OF A BUOY, screens open for 17.1.1 ACTUAL PHOTO OF BUOY, 17.1.2 DETAILS ABOUT BUOY. User can also open screens for sensor feed (7.B.7 SENSOR FEED FROM FIGURE 7 OF THE DOCUMEN). User can also open screens of video feed (7.B.5 VIDEO CAMERA FEED FROM FIGURE 7 OF THE DOCUMENT). User can also click to open screens of 17.1.3 TSUNAMI WARNING SYSTEMS which opens further screens of 17.1.3.1 SEA LEVEL LIVE ANALYTICS FOR SUNAMI and 17.1.3.1.1 AI BASED ANALYTICS FOR TSUNAMI, 17.1.4 WATER/SEA SWELL PERIODS which opens further screens of 17.1.4.1 WATER SWELL PERIODS ANALYTICS, 17.1.4.2 Al BASED ANALYTICS SCREEN, 17.1.5 WAVE HEIGHTS which opens further screens of 17.1.5.1 SAME AS 17.1.4.1 (SWEEL PERIODS ANALYTICS BUT FOR WAVE HEIGHTS), 17.1.6 UNDER WATER CURRENTS which opens further screens of 17.1.6.1 SAME AS 17.1.4.1 (SWEEL PERIODS ANALYTICS BUT FOR WATER CURRENTS), 17.1.7 SOLAR POWER OF BUOY which opens further screens of 17.1.7.1 GAUGES SHOWING BATTERY, 17.1.7.2 BATTERY, 17.1.7.3 RETURN TO CHARGE. User can also click to open screens of 7,11,13 REFERS TO MANUAL SECTION IN THESE FIGURES (MODELLED FOR THIS SECTION), 17.1.8 WARNING LIGHT SYSYTEM which opens further screens of 17.1.8.1 ON, 17.1.8.1.1 WARNING LIGHTS CAN BE SWITCHED ON, 17.1.8.2 OFF, 17.1.8.1.2 WARNING LIGHTS CAN BE SWITCHED OFF. User can also click to open screens of 17.1.9 AUTONOMOUS FLOAT OF BUOY (REFERS TO FIGURE 25 OF THE DOCUMENT).

Figure 18 depicts the holographic screens of a "Tug Boat". User click on hologram of Tug boat to open screens of REFERS TO SHIP SECTION OF THE FIGURE 7 IN THIS DOCUMENT, 18.1 WEIGHT METRICS which opens further screens of 18.1.1 ACTUAL WEIGHT, 18.1.2 PULLED WEIGHT, 18.1.3 BUTTONS FOR Al ANALYTICS leading to screens of 18.1.3.1 Al BASED ANALYTICS SCREEN OPENS UP. User can also open analytics screens of ships services by the selected tug boat, for example 18.1.4 SHIP 1, 18.1.5 SHIP 2 etc.

Figure 19 depicts the hologram of a "Port Berth". When user clicks on 19.1 HOLOGRAM OF PORT BERTH, further screens open like 19.1.1 ACTUAL PHOTO, 19.1.2 DETAILS OF BERTH. User can also click to view all crew working at the port berth (8.2 CREW FROM FIGURE 8 OF THIS DOCUMENT). User can click to view sensor feeds (7.B.7 REFERS TO SENSORS FROM FIGURE 7 OF THIS DOCUMENT). User can click to view video feed (7.B.5 REFERS TO VIDEO FEED FROM FIGURE 7 OF THIS DOCUMENT). User can also communicate with port berth using (7.B.3 REFERS TO COMMUNICATION SECTION IN THE FIGURE 7 OF THIS DOCUMENT). User can click to view screens of warning light systems of port berth (17 REFERS TO FIGURE 17 OF THE DOCUMENT) and 19.1.3 DOCKING SCHEDULE (REFERS TO FIGURE 20 OF THE DOCUMENT). User can also click to open screens of 7, 11 & 13 REFERS TO FIGURE 7,11 & 13 OF THE MANUAL SECTIONS OF THESE FIGURES. User can click to view screens of 19.1.4 CRANES SECTION which has all cranes liked to it 19.14.1 CLICKABLE BUTTON WHICH TAKES TO FIGURE 21. User can click to open screens of 19.1.5 CARGO CAPABILITY (MAPABLE FOR VARIOUS KINDS OF CARGOS and REFERS TO FIGURE 22 OF THE FIGURE). User can click to view screens of 19.1.6 CONVEYNOR BELT which further opens screens of 19.1.6.1 CONVEYNOR BELT CONTAINER (REFERS TO FIGURE 23 OF THE DOCUMENT) and 19.1.6.2 CONVEYNOR BELT MATERIALS (REFERS TO FIGURE 23 OF THE DOCUMENT).

Figure 20 depicts the "docking schedule" hologram screens (20.1 DOCKING SCHEDULE SCREEN HOLOGRAM). User can click to open screens of all ships 20.2 MAPABLE BUTTON FOR SHIPS (REFERS TO FIGURE 7 OF THE DOCUMENT). User can also click to open screens of 20.3 DAY WISE SCHEDULE which opens screens of 20.3.1 SHIP 1 DETAILS (EFERS TO FIGURE 7 OF THE DOCUMENT), 20.3.2 SHIP 2 DETAILS which opens further screens of 20.3.2.1 DOCKING SCHEDULE SCREENS OPEN. User can click to open screens of 20.4 MONTH WISE SCHEDULE, 20.5 YEARLY SCHEDULE. User can also click to open screens of 20.6 Al BASED ANALYTICS which opens to further screens of 20.6.1 Al BASED ANALYTICS.

Figure 21 depicts the holographic screens of "Cranes" as a digital asset. User can click to open 21.1 CRANES SCREEN; ALL CRANES ARE MAPABLE HERE which opens to further screens of 21.1.1 ACTUAL PHOTO, 21.1.2 DETAILS OF CRANE, Live GPS coordinates, 21.1.3 GPS COORDINATES OF CRANE. User can also click to view video feed (7.B.3 REFERS TO VIDEO FEED IN FIGURE 7 OF THE DOCUMENT OF THIS DOCUMENT). User can also communicate with each crane (7.B.7 REFERS TO COMMUNICATION FEED IN FIGURE 7 OF THE DOCUMENT OF THIS DOCUMENT). User can also click to open screens of all crew on cranes (8.2 REFERS TO CREW SECTION OF THE FIGURE 8 OF THIS DOCUMENT). User can also click to open screens of sensor feeds (7.B.5 SENSORS FORM FIGURE 7 OF THE DOCUMENT OF THIS DOCUMENT). User can also open manuals of cranes (7,11 & 13 REFERS TO FIGURE 7,11 & 13 OF THE MANUAL SECTIONS OF THESE FIGURES). User can click to open screens of 21.1.4 CRANE SCHEDULES which opens further screens of 21.1.4.1 DAY, MONTH AND YEAR WISE SCHEDULES, 21.1.4.1.1 DETAILS OF EACH PORTION. User can click to open screens of 21.1.5 LOAD DETAILS which opens further screens of 21.1.5.1 LOAD SENSOR SCREEN, 21.1.5.2 CURRENT LIFTING, 21.1.5.3 WIGHT REMISSIBLE LIMIT. User can click to open screens of 21.1.6 DISPATCH RATE which opens further screens of 21.1.6.1 PARAMETERS and 21.6.1.1 Al PARAMETERS SCREEN OPEN. User can also click to open screens of 21.1.7 CONTAINERS ON CRANE (REFERS TO FIGURE 10 OF THE DOCUMENT (MODELLED FOR THIS SECTION), 21.1.8 DELIVERY SCHEDULES (REFERS TO FIGURE 15 OF THE DOCUMENT) and 17.1.8 WARNING LIGHT SYSTEMS (REFER TO FIGURE 17).

Figure 22 depicts the holographic screens 22.1 CARGO CAPABILITY SCREEN. User click to opens screens of 22.1.1 CARGO DETAILS (REFERS TO FIGURE 10 OF THE DOCUMENT), 22.1.2 DISPATCH CAPACITY which opens further screens of 22.1.2.1 OPENS TO SCREEN SHOWING ALL PARAMETERS/INFORMATION/METRICS, 22.1.3 DISPATCH METRICS which opens further screens of 22.1.3.1 OPENS TO SCREEN SHOWING ALL PARAMETERS/INFORMATION/METRICS, 22.1.4 CREW HANDLING DISPATCH (REFERS TO FIGURE 8 OF THE DOCUMENT), 22.1.5 DISPATCH/ DELIVERY SCHEDULES which opens further screens of 22.1.5.1 OPENS TO SCREEN SHOWING ALL PARAMETERS/INFORMATION/METRICS and figure 15 (REFERS TO FIGURE 15 OF THE DOCUMENT). User can click to open screens of 22.1.6 DISPATCH ANALYTICS which opens further screens of 22.1.6.1 TABLE SHOWING ALL PARAMETERS/INFORMATION/METRICS and 22.1.6.1.1 OPENS TO SCREEN SHOWING ALL PARAMETERS/INFORMATION/METRICS

Figure 23 depicts the screens of "Cargo Capacity". User can click to open screens of 23.1 CONVEYNOR BELT CONTAINERS (REFERS TO ALL FIGURE RELATED TO CONVEYNOR BELT 21 IN THE DOCUMENT and 22 & 15 OPEN UPS CONVEYNOR BELT IN THE DOCUMENT). User can click to open screens of 23.2 CONVEYNOR BELT MATERIALS (REFERS TO ALL FIGURE RELATED TO CONVEYNOR BELT 21 IN THE DOCUMENT and 22 & 15 OPEN UPS CONVEYNOR BELT IN THE DOCUMENT).

Figure 24 depicts the digital asset of "Weigh Bridge". User can click 24.7 HOLOGRAM OF WEIGH BRIDGE AND SCREENS OPEN to open screens of 24.1 PHOTO OF THE WEIGH BRIDGES, 24.2 DETAILS OF WEIGH BRIDGES. User can click to open screens of video feeds (7.B.3 REFERS TO VIDEO FEED IN FIGURE 7 OF THE DOCUMENT OF THIS DOCUMENT) and communication screens (7.B.7 REFERS TO COMMUNICATION FEED IN FIGURE 7 OF THE DOCUMENT OF THIS DOCUMENT). User can click to open screens for crew of the weigh bridge (8.2 REFERS TO CREW SECTION OF THE FIGURE 8 OF THIS DOCUMENT), sensor feed screens (7.B.5 SENSORS FORM FIGURE 7 OF THE DOCUMENT OF THIS DOCUMENT). User can click to open screens of 24.3 WEIGH BRIDGE DATA which opens to further screens 24.3.1 GOODS (REFERS TO FIGURE 10 OF THE DOCUMENT), 24.3.2 VEHICLE (REFERS TO FIGURE 25 OF THIS DOCUMENT), 24.3.3 WEIGHT, 24.3.4 VENDOR which opens to further screens of 24.3.4.1 VENDOR DETAILS, 24.3.4.2 DIGITAL SCANS, 24.3.4.2.1 SCANS OF RECORDS OPEN. User can click to open screens of 24.3.4.3 ENTRY/EXIT REGISTER, 24.4 CUSTOM RECORDS which opens to further screens of 24.4.1 REFERS TO ITEMS and 24.4.1.1 DIGITAL SCANS OF RECORDS. User can click to open screens of 24.5 AUTHORIZATION FOR WEIGH BRIDGE USE which open to more screens of 24.5.1 AUTHORIZATION RECORD OPEN. User can click to open screens of 24.6 BILLING PORTAL which opens further screens of 24.6.1 POINT OF SALES ACCESS, 24.6.1.1 BILLING ERP DETAILS, 24.6.1.2 SCREENS + LIVE BILLLING. User can click to open screens of live 24.8 GPS COORDINATES and 17.1.8 REFERS TO WARNING LIGHT SYSTEMS DIAGRAMS IN FIGURE 17 OF THIS DOCUMENT. User can see all manuals by opening screens of 7,11 & 13 REFERS TO MANUAL SECTION OF FIGURE 7,11 & 13 OF THE DOCUMENT.

Figure 25 depicts the screens of 25.1 REFERS TO HOLOGRAMIC IMAGE OF VEHICLE. User can click to open screens of 25.1.1 PHOTO OF VEHICLE, 25.1.2 DETAILS OF VEHICLE live 25.1.3 GPS COORDINATES. User can click to open screens for crew of the vehicle (8.2 REFERS TO CREW SECTION OF THE FIGURE 8 OF THIS DOCUMENT. Screens for communicating (7.B.3 REFERS TO COMMUNICATION FEED IN FIGURE 7 OF THE DOCUMENT OF THIS DOCUMENT), Video feed screens (7.B.5 REFERS TO VIDEO FEED IN FIGURE 7 OF THE DOCUMENT OF THIS DOCUMENT), Sensor feed screens (7.B.7 SENSORS FORM FIGURE 7 OF THE DOCUMENT OF THIS DOCUMENT). User can click to open screens for 25.1.4 DELIVERY SCHEDULES/ DISPATCH SCHEDULES (22 & 15 REFERS TO FIGURE 22&15 FROM WHICH THE SCEENS WOULD BE TAKEN FROM THIS DOCUMENT), 25.1.5 AUTHORIZATION RECORDS (24 REFERS TO AUTHORIZATION PART OF FIGURE 24 ON WHICH THIS PART WILL BE MODELLED), Video feeds screens (B.5 VIDEO FEED TAKEN FROM FIGURE 7 IN THIS DOCUMENT). User can click to open screens for 25.1.6 AUTONOMOUS DRIVE which opens further screens of 25.1.6.1 START BUTTON, 25.1.6.2 CONTROL SCREEN, 25.1.6.3 DESTINATION INPUT, 25.1.6.4 MAP LOCATOR, 25.1.6.5 CURRENT LOCATION, 25.1.6.6 ESTIMATED TIME OF TRAVEL & ARRIVAL. User can click to open screens of manuals (7,11 & 13 REFERS TO MANUAL SECTION IN FIGURE 7,11 & 13), Custom records (25.1.7 CUSTOM RECORDS REFERS TO FIGURE 24 IN THIS DOCUMENT), 25.1.8 CARGO DETAILS (REFERS TO FIGURE 10 IN THIS DOCUMENT).

Figure 26 depicts the screens of a 26.1 STORAGE TANK HOLOGRAM. User can click to open screens of 26.2 LADDERS, 26.3 ACUTAL PHOTO OF STORAGE TANK, 26.4 DETAILS OF STORAGE TANK, Live 26.5 GPS COORDINATES. User can open screens for communication (7.B.3 REFERS TO COMMUNICATION FEED IN FIGURE 7 OF THE DOCUMENT OF THIS DOCUMENT). User can open screens to view crew working at storage tanks using 8.2 REFERS TO CREW SECTION OF THE FIGURE 8 OF THIS DOCUMENT. User can access sensor feed screens (7.B.7 SENSORS FORM FIGURE 7 OF THE DOCUMENT OF THIS DOCUMENT), 26.6 GOODS DETAILS-REFER TO FIGURE 10. User can click to open screens of manuals (7 REFERS TO FIGURE 7 FROM WHICH MANUALS HAVE TO TAKEN AND MODELLED), screens of stock (12.4 REFERS TO STOCK TAKEN FROM FIGURE 12 IN THIS DOCUMENT), screens of manuals (13.2 REFERS TO MAINTANENCE RECORDS FROM FIGURE 13 IN THIS DOCUMENT), screens of ISSUING AND DELIVERIES SCHEDULE FROM FIGURE 15& 22 OF THIS DOCUMENT, video feed screens (7.B.5 REFERS TO VIDEO FEED IN FIGURE 7 OF THE DOCUMENT OF THIS DOCUMENT), Screens of 24 REFERS TO CUSTOM RECORDS FROM FIGURE 24 IN THIS DOCUMENT, screens of 24 REFERS TO AUTHORIZATION RECORDS FROM FIGURE 24 IN THIS DOCUMENT and screens of 17.1.8 REFERS TO WARNING LIGHT SYSTEMS IN FIGURE 17 IN THIS DOCUMENT

Figure 27 depicts the 27.1 HOLOGRAM OF PORT OPEN STORAGE-CARGO AREA IN AR-MR. User can click to open screens of 27.3 OPEN STORAGE AREA OF PORT, REFERS FIGURE 26 IN THIS DOCUMENT MAPPED HERE, REFERS TO FIGURE 10 OF THIS DOCUMENT, REFERS FIGURE 22 OF THIS DOCUMENT, REFERS TO VEHICLE REGISTER FROM FIGURE 25 IN THIS DOCUMENT, 17.1.8 REFERS TO LIGHT WARNING SYSTEMS FROM FIGURE 17 IN THIS DOCUMENT. **NOTE: SAME ABOVE WILL BE FOR ALL CLOSED STORAGE AREA/ WAREHOUSE/ GODOWNS.**

Figure 28 refers to Hologram of a Lighthouse 28.1 HOLOGRAM OF LIGHT HOUSE. User can click to open screens of 28.2 ACUTAL PHOTO, 28.3 DETAILS, Live 28.4 GPS COORDINATES. User can click to open screens of crew at lighthouse (8.2 CREW DETAILS FROMFIGURE 8), Communication screens (7.B.3 COMMUNICATION FEED FROM FIGURE 7 IN THIS DOCUMENT), Sensor feed screens (7.B.7 SENSOR FEED FROM FIGURE 7 IN THIS DOCUMENT), Maintenance records (13.2 REFERS TO MAINTANENCE RECORDS IN FIGURE 13, Screens of 17.1.8 REFERS TO WARNING LIGHT SYSTEMS IN FIGURE 17 and 7.B.5 REFERS TO VIDEO FEED IN THE FIGURE 7.

Figure 29 depicts 29.1 REFERS TO HOLOGRAM OF SECURITY TOWER. User can click to view screens of 29.2 REFERS TO ACTUAL PHOTO OF THE SECURITY TOWER, 29.3 DETAILS ABOUT THE SECURITY TOWER, Live 29.4 GPS COORDINATES. User can also click to view screens of crew working at security tower (8.2 REFERS TO CREW SECTION OF THE FIGURE 8 IN THIS DOCUMENT), video feed screens (7.B.3 REFERS TO VIDEO FEED SECTION OF THE FIGURE 7 IN THIS DOCUMENT), Communication screens (7.B.5 REFERS TO COMMUNICATION SECTION OF THE FIGURE 7 IN THIS DOCUMENT), Warning light screens (17.1.8 REFERS TO WARNING LIGHT SYSTEM SECTION OF THE FIGURE 17 IN THIS DOCUMENT), sensor feed screens (7.B.7 REFERS TO SENSORS IN THE FIGURE 7 OF THIS DOCUMENT), duty roster screens (8.8 REFERS TO DUTY ROSTER IN THE FIGURE 8 OF THIS DOCUMENT), screens for deliveries schedules (15 & 22 REFERS TO DELIVERIES SCHEDULE FROM FIGURE 15 & 22 IN THIS DOCUMENT), screens for 29.5 AMMUNATION STOCK which further opens to screens of 29.5.1 ITEM, 29.5.1.1 ACUTAL PHOTO, 29.5.1.2 DETAILS, 29.5.1.3 DIGITAL SCANS OF RECORDS OF ITEM, 29.5.1.4 ITEM LOCATOR SENSOR, 29.5.1.5 ITEM ISSUED TO (8 REFERS TO CREW SECTION OF THE FIGURE 8 IN THIS DOCUMENT), 29.5.2 ISSUED, 29.5.3 USED, 9.5.4 BALANCE. User can also click to open screens of 29.6, TARGET SYSTEMS, 29.6.1 TARGET SCREEN, 29.6.2 LOAD, 29.6.3 FIRE.

Figure 30 depicts the digital asset of a "Train and Railway Lines" (30.1 REFERS TO HOLOGRAM OF TRAIN). User can click to open screens of "Goods Carriages" (26 REFERS TO FIGURE 26 OF THIS DOCUMENT). User can click to open screens of 7&11 REFES TO FIGURE 7&11 OF THIS DOCUMENT MODELLED FOR THIS SECTION, 30.1.1 REFERS TO ROUTE MAP which opens to further screens of 30.1.1.1 HOLOGRAM OF ROUTE, 30.1.1.1.1 ROUTE SCREEN OPENS UP, 30.1.1.1.1.1 ESTIMATED TIME OF ARRIVAL, 30.1.1.1.1.2 DISTANCE TRAVELLED, 30.1.1.1.1.3 ROUTE STOPPAGES, 30.1.1.1.1.4 OTHER INFORMATION CAN BE MAPPED, 30.1.1.1.2 TRAIN STOPPING POINT, 30.1.1.1.2.1 ACTUAL PHOTO. User can also open communication screens (7.B.7 COMMUNICATION SYSTEM FROM FIGURE 7 OF THIS DIAGRAM), 30.1.1.1.2.2 MAP which opens to further screens of 30.1.1.1.2.2.1 SATTELITE IMAGE, 30.1.1.1.2.2.2 GOOGLE MAP. User can also open screens of live 30.1.1.1.2.3 GPS COORDINATES, 24.5 AUTHORIZATION RECORDS FROM FIGURE 24 OF THIS DOCUMENT and 24.4 CUSTOM RECORDS FROM FIGURE 24 OF THIS DOCUMENT

Figure 31 depicts the screens of "Port Channel and Outer Sea" (31.1 PORT, 31.2 AN ICON IN HOLOGRAM REPRESENTING "PORT CHANNEL", 31.3 RADAR FEED OF CHANNEL/OUTER SEA). User can click to view screens for all ships in water (7 REFERS FIGURE 7 OF THIS DOCUMENT WHICH IS MAPPED FOR ALL SHIPS) and all Buoys (17 REFERS TO FIGURE 17 OF THIS DOCUMENT WHICH IS MAPPED FOR ALL BUOYS). User can also click to view screens of 31.4 NAVIGATION FEED OF CHANNEL and 7.B.7 SENSORS FORM FIGURE 7 MAPPED FOR THIS FIGURE

Figure 32 depicts the screens of a Jetty (32.1 HOLOGRAM OF JETTY). User can click to open screens of 32.3 BERTH (19 REFERS TO FIGURE 19 OF THE DOCUMENT MAPPED FOR THIS PART), 32.4 LAMPPOST (7.B.3 REFERS TO VIDEO FEED SECTION OF THE FIGURE 7 IN THIS DOCUMENT, 7.B.5 REFERS TO COMMUNICATION SECTION OF THE FIGURE 7 IN THIS DOCUMENT, 7.B.7 REFERS TO SENSORS IN THE FIGURE 7 OF THIS DOCUMENT, 17.1.8 REFERS TO WARNING LIGHT SYSTEM SECTION OF THE FIGURE 17 IN THIS DOCUMENT)

Figure 33 depicts an example of screens of NAUTICA Al- ARTIFICIAL INTELLIGENCE COMMMAND CENTRE. 33.1 REFERS TO FIGURE 2 WHICH CAN BE MODIFIED AS PER CHANGES. Similarly, NAUTICA Al must be made for all Digital Assets in NAUTICA. User can click on 33.2 SHIP Al to open further screens of 33.2.1 ALL ASSESTS (33.2.1.1 TO 33.2.1.5 MAPABLE FOR VARIOUS SHIPS). User can the select each digital asset to view further Ai based analytics of that asset (33.4 BUTTON TO CLICK FOR EACH ASSET TO GO TO ITS AI-BASED ANALYTICS)

Figure 34 depicts an example of further screens of NAUTICA Al that open after Figure 33. User can click to open 34.1 DESCRIPTIVE ANALYTICS AND OPERATIONS which opens into further screens of 34.1.1 SCREENS OPEN FOR EACH PARAMETER WITH ALL KINDS OF ANALYTICS & OPERATIONS, 34.1.2 BUTTONS MAPABLE FOR ALL POSSIBLE AND REQUIRED PARAMETERS LISTED. User can click to open screens of 34.2 PREDICTIVE ANALYTICS AND OPERATIONS which open further screens of 34.2.1 SCREENS OPEN FOR EACH PARAMETER WITH ALL KINDS OF ANALYTICS & OPERATIONS and 34.2.2 BUTTONS MAPABLE FOR ALL POSSIBLE AND REQUIRED PARAMETERS LISTED. User can open screens of 34.3 PRESECRIPTIVE ANALYTICS AND OPERATIONS which opens further screens of 34.3.1 SCREENS OPEN FOR EACH PARAMETER WITH ALL KINDS OF ANALYTICS & OPERATION and 34.3.2 BUTTONS MAPABLE FOR ALL POSSIBLE AND REQUIRED PARAMETERS LISTED. User can also open screens of 34.4 Al COGNITIVE ANALYTICS & OPERATIONS (WARNING: AUTONOMY GIVEN TO Al) which opens further screens of 34.4.1 SCREENS OPEN ON CLICK. NOTE: SAME HAS TO BE MADE FOR ALL NAUTICA BOXES of all DIGITAL ASSETS IN NAUTICA CENTRAL COMMAND

Figure 35 depicts the 35.2 HOLOGRAM OF ROTATING EARTH. NOTE: ON CLICKING EARTH BUTTON IN NAUTICA CENTAL COMMAND, A 3D HOLOGRAM OF EARTH APPEARS IN AR-MR SHOWING ALL ASSETS PLUGGED INTO NAUTICA. User can click on any hologram of Digital Asset at any point of time linked to NAUTCA live on Earth and view its screens (35.1 HOLOGRAM OF ALL ASSETS WHICH CAN BE CLICKED TO OPEN THEIR SCREENS)

Figure 36 depicts the Digital Asset of a "DRONE / UNMANNED ARIAL VEHICLE 9UAV)". User can click to open screens of sensor feeds (7.B.7 REFERS TO SENSORS FEED FROM FIGURE 7 OF THIS DOCUMENT), screens of video feeds (7.B.3 REFERS TO VIDEO FEED FROM FIGURE 7 OF THIS DOCUMENT), screens of 36.1 LIDAR FEED which further opens to screens of 36.1.1 LIDAR SCREENS AND FEED OPEN. User can click to open screens of 36.2 SOLAR POWER OF DRONE,36.3 AUTONOMOUS FLIGHT which further opens to screens of 36.3.1 MAPPED AS PER AUTONOMOUS DRIVE OF FIGURE 25 OF THIS DOCUMENT. User can click to open screens of 36.4 RADAR FEED which further opens to screens of 36.4.1 RADAR SCREENS OPEN UP. User can click to open screens of 36.5 SONAR FEED which further opens to screens of 36.5.1 SONAR SCREENS & FEED OPENS UP.

### EXAMPLES OF ANALYTICS PARAEMETERS FOR NAUTICA AI- ARTIFICIAL INTELLIGENCE ARE BELOW. MORE PARAMETERS CAN BE ADDED AS REQUIRED.

| **DEPARTMENT** | **AI ANALYTICS PARAMENTERS** |
|---|---|
| Accounts | Revenue |
| Accounts | Receivables |
| Accounts | Payables |
| Accounts | Expense Control |
| Accounts | Maintaining Books |
| Accounts | Taxation |
| Accounts | Reporting |
| Accounts | Customs |
| Accounts | SLA |
| BD | Sales Target |
| BD | Commodity Ratio (Product Mix) |
| BD | Pricing |
| BD | Team P&L |
| BD | Customer Base |
| BD | Customer complaints |
| Cargo Operations | Revenue |
| Cargo Operations | New Initiatives |
| Cargo Operations | Cost Management |
| Cargo Operations | SLA \| New Initiatives |
| Cargo Operations | Customer Satisfaction |
| Cargo Operations | Preparedness |
| Cargo Operations | Not Prepared |
| Cargo Operations | Crane, Berth & Tippers etc |
| Cargo Operations | Discharge Rate |
| Cargo Operations | Capacity Management |
| Cargo Operations | Berth Availability |
| Cargo Operations | SLA Management |
| Cargo Operations | Loss % |
| Cargo Operations | Customer Retention |
| Cargo Operations | Preparedness |
| Commercials | Procurement P&L |
| Commercials | Effective Procurement |
| Commercials | SLA |
| Commercials | Compliance |
| Commercials | CSAT |
| Commercials | Preparedness |
| Commercials | Not Prepared |
| EHS & Safety | EHS Budget |
| EHS & Safety | New Initiatives |
| EHS & Safety | Certificates |
| EHS & Safety | Compliance |
| EHS & Safety | GreenBelt |
| EHS & Safety | Safety Awareness |
| EHS & Safety | Accidents |
| EHS & Safety | Preparedness |
| EHS & Safety | Not Prepared |
| Electrical Engineering | Maintenance Electrical |
| Electrical Engineering | Mechanization |
| Electrical Engineering | SLA Management |
| Electrical Engineering | SLA Management |
| Electrical Engineering | SLA Mechanization |
| Electrical Engineering | Customer Satisfaction |
| Electrical Engineering | Preparedness |
| Electrical Engineering | Not Prepared |
| Finance | Budget |
| Finance | Team P&L |
| Finance | Closing Books |
| Finance | MIS |
| Finance | Cashflow |
| Finance | Auditing & Statutory Compliance |
| Finance | Expense Control |
| Finance | Accounts Payable |
| Finance | Reporting |
| Finance | SLA |
| General | Port Policy |
| General | Company Policy |
| General | L&D |
| General | Innovation |
| General | Innovation |
| General | L&D |
| General | Innovation |
| General | Attrition |
| HR | HR Cost |
| HR | Payroll & Pay slips |
| HR | Payroll & Pay slips |
| HR | Employee Queries |
| HR | Employee Queries |
| HR | Recruiting closure |
| HR | Employee Engagement |
| IT | New Initiatives |
| IT | Maintenance |
| IT | SLA Management |
| IT | New Initiatives SLA |
| IT | Customer Satisfaction |
| IT | Preparedness |
| IT | Not Prepared |
| Marine Operations & Security | Cost Management |
| Marine Operations & Security | Pilot Captain & Tugs Availability |
| Marine Operations & Security | Navigational Aid |
| Marine Operations & Security | SLA Management |
| Marine Operations & Security | Dredging |
| Marine Operations & Security | Customer Retention |
| Marine Operations & Security | Customer Satisfaction |
| Marine Operations & Security | Preparedness |
| Marine Operations & Security | Not Prepared |
| Mechanical Engineering | Maintenance Mechanical |
| Mechanical Engineering | New Initiatives |
| Mechanical Engineering | Utilization of Resources |
| Mechanical Engineering | SLA Management |
| Mechanical Engineering | SLA Management |
| Mechanical Engineering | Customer Satisfaction |
| Mechanical Engineering | Preparedness |
| Mechanical Engineering | Not Prepared |
| Over all Engineering | maintenance New Projects |
| Over all Engineering | Operating Costs |
| Over all Engineering | Deadline |
| Over all Engineering | SLA Management |
| Over all Engineering | Customer Satisfaction |
| Over all Engineering | Preparedness |
| Over all Engineering | Not Prepared |
| Overall Cargo Ops | Cost Management |
| Overall Cargo Ops | Capacity Management |
| Overall Cargo Ops | SLA Management |
| Overall Cargo Ops | Customer Retention |
| Overall Cargo Ops | Customer Satisfaction |
| Overall Cargo Ops | Preparedness |
| Overall Cargo Ops | Not Prepared |
| Overall Engineering | Maintenance Electrical |
| Civil Engineering | Maintenance Civil Projects |
| Overall Engineering | New Projects P&L |
| Overall Engineering | SLA Management |
| Overall Engineering | New Initiatives |
| Overall Engineering | Customer Satisfaction |
| Overall Engineering | Preparedness |
| Overall Engineering | Not Prepared |
| Railways | Rail Loading Cost |
| Railways | Discharge Rate |
| Railways | Capacity Management |
| Railways | Berth Availability |
| Railways | SLA Management |
| Railways | Loss % |
| Railways | Customer Retention |
| Railways | Customer Satisfaction |
| Railways | Preparedness |
| Railways | Not Prepared |
| Security | Security P&L |
| Security | Utilization of Employees |
| Security | Utilization of Resources |
| Security | Threat/ Safety |
| Security | SLA Management |
| Security | Port Policy |
| Security | Company Policy |
| Security | Preparedness |
| Security | Not Prepared |
| Tank Farm | Cost Management |
| Tank Farm | Capacity Management |
| Tank Farm | Evacuation Capacity |
| Tank Farm | SLA Management |
| Tank Farm | Loss % |
| Tank Farm | Customer Retention |
| Tank Farm | Customer Satisfaction |
| Tank Farm | Preparedness |
| Tank Farm | Not Prepared |
| Warehouse Management | Cost Management |
| Warehouse Management | Revenue from WH |
| Warehouse Management | Evacuation Capacity |
| Warehouse Management | SLA Management |
| Warehouse Management | Loss % |
| Warehouse Management | Customer Retention |
| Warehouse Management | Customer Satisfaction |
| Warehouse Management | Preparedness |
| Warehouse Management | Not Prepared |
| Project | Total Tasks |
| Project | Total Sub Projects |
| Project | Activity Time Line (Start Dt, End Dt) |
| HR | CTC by Department |
| HR | Designation \| Avg CTC vs Years of experience |
| HR | Salary breakup Details |
| HR | Education \| Avg CTC vs Years of experience |
| HR | Total CTC and Count of Employees |
| HR | Average Working Hours by Employee |
| HR | Total Present/Absent |
| HR | Leave by Department |
| HR | Late In/Early Out by Month |
| HR | Present/Absent by Month |
| HR | Leave Type |
| HR | Department wise Hike % vs Rating |
| HR | Hike % vs Performance Rating |
| HR | Individual \| Hike % vs Rating |
| HR | Hike % vs Revenue (in Crores) |
| HR | No of Promotions |
| HR | Avg Rating \| Hike \| Revenue |
| HR | Total Contract Labour |
| HR | Labour Skills and Nature of work |
| HR | Labour by Department |
| HR | Education by Employee |
| HR | Total Experience in KPPL & outside |
| HR | Employee Age |
| HR | How many Emp likely to Leave and Stay |
| Finance | Total Cost and Cost by Location |
| Finance | Cost by month and category |
| Finance | Cost Details |
| Finance | Tonne \| Expenses \| Revenue Details by month by value (Actual vs Budget) |
| Finance | Identified Top Expenses |
| Finance | Expenses details by month (Actual vs Budget) |
| Finance | Revenue details by month (Actual vs Budget) |
| Finance | P&L Details summary |
| Finance | Revenue \| Expenses by Category |
| Finance | Comparison of Actual and Budgeted Expenses and Revenue |

## Claims

1. A system providing complete global maritime mobility, operation and execution of any kind, anywhere, at any place by an authorised user, the system comprising live hologram projections "Digital Assets" of all on field "Physical Assets" including humans;
and the system using Augmented Reality-Mixed Reality for creating live "Digital Twins" referred to as Hologram Projections of all available physical assets including humans in real world complete with monitoring, visualisation, communication, operations and execution capabilities; the system incorporating Data Infused Holograms with Artificial Intelligence Powered Descriptive, Predictive, Prescriptive and Cognitive (Fully Autonomous) Analytics and operative capabilities for Global Maritime World;
each hologram of a physical asset having infinite data points as required.

2. System as claimed in claim 1 providing live holographic visualisations of all Maritime assets and every surface area of the earth, including all seas, waterways and land.

3. System as claimed in claim 2 wherein live visualizations in holographic visualisations with Artificial intelligence Analytics in real time leads to total mission awareness, planning, rehearsal and execution - operations.

4. System as claimed in claim 1 wherein the system itself creates Absolute Situational awareness by providing real-time information on the current situation and execution-operational capabilities.

5. System as claimed in claim 1 wherein all the functions of the system are "Touch" enabled and "Voice Command" enabled.

6. System as claimed in claim 1, wherein the system is also developed in software mode available in computers, tablets, mobile phones and smart screens.

7. System as claimed in claim 1, wherein User can select any country or even combibe all countries by selecting the "World" Button.

8. System as claimed in claim 1, wherein Authority levels of the system access per screen and functions can be decided as per user requirements.

9. System as claimed in claim 1, wherein Holograms of the system can also be held by hand and moved around.

10. Method of executing the Nautica system as claimed in claim 1 wherein a user starts the system by wearing SMART glass / eye wear with Augmented Reality- Mixed Reality holographic projection capability or with Augmented Reality - Mixed Reality holographic projection capability;
post starting the system the user sees hologram box in AR-MR box with NAUTICA CENTRAL COMMAND and NAUTICA ARTIFICIAL INTELIGENCE COMMAND and also enables the user to see the physical environment around him in AR-MR.
